Europäisches Patentamt

European Patent Office

Office européen des brevets

(19)

(11) **EP 1 395 038 A2**

(12) **EUROPEAN PATENT APPLICATION**

(43) Date of publication:
03.03.2004 Bulletin 2004/10

(51) Int Cl.7: **H04N 1/40**

(21) Application number: **03255326.5**

(22) Date of filing: **27.08.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **30.08.2002 JP 2002255997**

(71) Applicant: **KONICA CORPORATION**
**Tokyo (JP)**

(72) Inventors:
• **Takano, Hiroaki**
**Hino-shi Tokyo 191-8511 (JP)**

• **Ito, Tsukusa**
**Hino-shi Tokyo 191-8511 (JP)**
• **Ikeda, Chizuko**
**Hino-shi Tokyo 191-8511 (JP)**

(74) Representative: **Nicholls, Michael John**
**J.A. KEMP & CO.**
**14, South Square**
**Gray's Inn**
**London WC1R 5JJ (GB)**

(54) **Image processing method, image processing apparatus, image recording apparatus and recording medium**

(57)    A method of applying an image processing onto two dimensionally-arranged image data representing a captured image including a main captured-subject and producing image signals to reproduce the captured image visually with one of various reproduction sizes on one of various kinds of recording media, comprises steps of determining a reproduction size of the captured image to be reproduced visually on a recording medium; determining a size of the main captured-subject on the determined reproduction size of the captured image; determining a content of the image processing on the basis of the determined reproduction size of the captured image and the determined size of the main captured-subject; and applying the image processing with the determined content onto the two dimensionally-arranged image data and producing image signals to reproduce the captured image visually with the determined reproduction size on the recording medium.

**EP 1 395 038 A2**

**Description**

## BACKGROUND OF THE INVENTION

The present invention relates to an image processing method for a photographed image, an image processing apparatus to which the image processing method is applied, an image recording apparatus to which the image processing method is applied and a recording medium in which a program for executing the image processing method is recorded.

In recent years, digital image data obtained through photographing by an image capturing device such as a digital camera or the like are displayed or printed in various methods. The digital image data of this kind are displayed on a display device such as a display monitor such as, for example, CRT (Cathode Ray Tube), a liquid crystal and plasma, and a small-sized liquid crystal monitor of a cell-phone, or they are printed as hard copy images from an output device such as a digital printer, an ink jet printer or a thermal printer.

When digital image data are displayed or printed for appreciation, image processing procedures such as gradation adjustment, luminance adjustment, color balance adjustment and sharpness emphasis are conducted, so that desired image quality may be obtained on a display monitor or a hard copy image used for appreciation.

There have so far been developed image processing methods coping with the aforementioned various display and printing methods. For example, there is an attempt to standardize a color space expressed by digital RGB signals into a color space that does not depend on characteristics of an image capturing device, and many digital image data are employing sRGB as standardized color space at present (see "Multimedia Systems and Equipment-Colour Measurement and Management-Part 2-1: Colour Management-Default RGB Colour Space-sRGB" IEC"61966-2-1). This color space of sRGB is established to correspond to a color reproduction area of the standard CRT display monitor.

Further, an ordinary digital camera is equipped with a CCD type image pickup element (hereinafter referred to also as CCD simply) having a photoelectric conversion function wherein CCD (Charge Coupled Device; charge-coupled device), a charge transfer mechanism called a shift register and a checkered color filter are combined to give color sensitivity.

Digital image data outputted from the digital camera are those wherein correction of a photoelectric conversion function of CCD such as, for example, image processing of gradation correction, cross-talk correction of spectral sensitivity, dark current noise control, sharpening, white balance adjustment and chroma (chromaticness, saturation) adjustment are conducted, and are those which have been subjected to file conversion into data standardized so that an image editing software is used for reading and display may be possible, and to compression processing.

As a data format of this kind, there are known, for example, Baseline Tiff Rev. 6. ORGB Full Color Image which is employed as non-compression file of Exif (Exchangeable image file format) file, and a compression data file format conforming to JPEG (Joint Photographic Experts Group) format.

The Exif file is one conforming to sRGB. The correction of photoelectric conversion function of CCD is established so that image quality becomes optimum on the display monitor that conforms to sRGB.

In general, in any digital camera, if it is equipped with a function to write tag information for instructing display with standard color space (hereinafter referred to also as a monitor profile) of a display monitor conforming to sRGB signals and added information showing machine type dependence information such as the number of pixels, pixel arrangement and the number of bits per one pixel, in a file header of digital image data as metadata, it is possible to analyze tag information by an image editing software that indicates digital image data on a display monitor, to urge an operator for change of monitor profile to sRGB, and to conduct change processing automatically. Thus, a difference between displays each being different from the other can be reduced, and the optimum state of images can be realized for appreciation.

Further, as added information (additional information), there are used tags (codes) showing information relating directly to camera models (machine types) such as, for example, a name of a camera and a code number, information for setting photographing conditions such as exposure time, shutter speed, an aperture value (f-number), ISO speed, a luminance value, a range of subject distance, a light source, with or without electronic flash, a subject area, white balance, zoom magnification, subject structure, types of photographing scene, an amount of reflected light of a light flux of electronic flash and photographing chroma, and information relating to types of subjects. The image editing software and the output device are equipped with a function to read the added information and to make the image quality of hard copy images to be excellent.

Incidentally, a color reproduction area of an image displayed by a display device such as a CRT display monitor of a hard copy image printed by various types of print devices varies depending on a phosphor to be used or on the structure of a coloring material. For example, in the color reproduction area of a CRT display monitor corresponding to sRGB standard color space, a bright green area or a bright blue area is broad and that color reproduction area cannot be reproduced on a hard copy that is made through silver halide photographic printing or through printing by an ink jet printer.

On the contrary, there is present an area which cannot be reproduced by CRT display monitor corresponding to sRGB standard color space, in a cyan area for ink jet printing and in a yellow area of a silver halide photograph (see, for example, page 444 of "Fine imaging and digital photograph" published by Corona Co. and edited by The Publication Committee of The Science of Photographic Science and Technology of Japan). On the other hand, there is a possibility that the scene of the subject to be photographed includes one showing an area color that cannot be reproduced by the aforesaid both color reproduction areas.

Since there is a restriction for the recordable color gamut in the color space (including sRGB) optimized under the assumption of a display and a print by a specific device, as stated above, it is necessary to adjust for mapping by compressing to the recordable color gamut, when recording information obtained by an image capturing device. In this case, clipping wherein the chromaticity point which is outside the recordable color gamut is mapped on the closest boundary of the color gamut is most simple, but, in this way, gradation (tone) at outside the color gamut is blocked, resulting in an image that shows incompatibility in the course of appreciation.

At present, therefore, there is generally employed nonlinear compression wherein chromaticity points in the area where chroma is higher than the appropriate threshold value are compressed smoothly in accordance with a size of chroma. As a result, chroma is compressed to be recorded even at the chromaticity point inside the recordable color gamut. (Details of the mapping method for the color gamut are described, for example, on page 447 of "Fine imaging and digital photograph" published by Corona Co. and edited by The Publication Committee of The Science of Photographic Science and Technology of Japan.)

However, when the color gamut and the luminance range are compressed as stated above, the compressed gradation information and clipped information are lost at the time of compression and clipping, being caused by the principle of the digital image recorded with the discrete numerical values, thus, it is impossible to restore to the original state. This is a big restriction in general-purpose properties of digital images of high image quality.

For example, when printing images recorded in the sRGB standard color space, it is necessary to conduct mapping again based on a difference of both color reproduction areas. However, since gradation information of the area compressed momentarily in the course of recording is lost, smoothness of the gradation is worsened, compared with an occasion wherein information obtained by the image capturing device is mapped directly on the color reproduction area of the print device. When there are problems such as gradation compression conditions in the course of recording are inappropriate, pictures are whitish, a face is dark, and a shadow is blocked and white clearness in a highlight area is remarkable, even when trying to improve images by changing gradation setting, image improvement is extremely insufficient compared with an occasion where an image is made again newly from information obtained by the image capturing device, because information of compressed gradation and information of blocking and white clearing portion are already lost.

The problems stated above are caused by compressing and thereby recording information of a broad color gamut obtained by an image capturing device and of a luminance range to visual image-referred data which are optimized under the assumption of the appreciation image. In this case, if the information of a broad color gamut obtained by an image capturing device and of a luminance range are recorded as scene-referred image data which are not compressed, careless loss of information can be prevented. As a standard color space that is suitable for recording the scene-referred image data of this kind, there are proposed, for example, RIMM RGB and ERIMM RGB (see pages 418 - 426 of Journal of Imaging Science and Technology in $45^{th}$ volume (2001)).

Data expressed by the standard color space of this kind are not suitable for appreciating by displaying directly on a display monitor. In general, a display monitor is incorporated in or connected to a digital camera, so that a user may confirm an angle of view prior to photographing, or confirm contents of photographing after the photographing. When photographing data are recorded as visual image-referred data such as sRGB, the data can be displayed directly on the display monitor without being converted, which is a merit. When photographing data are recorded as scene-referred image data, the data need to be converted again as visual image-referred data so that the data may be displayed.

When converting the scene-referred image data into visual image data again, inputted image signals expressing a photographed image need to be given a prescribed image processing so that preferable impression may be given when images outputted on media are observed. The doubled conversion processing and quality improvement processing like these in a camera increase in processing load and power consumption, and cause a decline of multiple exposure properties and a restriction of number of exposures in the case of battery-powered photographing.

In the image quality improvement processing technology to be given in the course of generating visual image-referred data from the scene-referred image data wherein information including a broad color gamut and a luminance range obtained by an image capturing device is not compressed, it is difficult, for the conventional technology alone, to output on a medium the image wherein characteristics of the scene-referred image data are used efficiently and better impression is given.

TOKKAIHEI No. 11-339035 discloses a method to determine simply an image processing parameter for emphasizing and controlling a face image depending on a size of a face image included in the image.

TOKKAIHEI No. 11-196264 discloses a technology to prevent unpleasant frequency components from being emphasized, when reproducing by enlarging or reducing digital image data optimized in terms of graininess sharpness, depending on a prescribed output size.

TOKKAIHEI No. 9-233423 discloses an image data conversion method of a digital printer for recording an image on a recording material based on image data wherein a face image area of a person is extracted from image data, and an image processing method is changed depending on a size of the face image area or on presence of the face image area.

The technology disclosed in TOKKAIHEI No. 11-339035 is a method to determine an image processing parameter in the case of conducting image processing for image data indicating images including a face image of a person wherein a size of the face image is estimated based on the position specified in the lateral direction of the face image in the image displayed on a display means as a visible image, and the image processing parameter is determined based on the estimated size of the face image, and the position specified in the lateral direction of the face image is obtained when an operator specifies a position in the lateral direction of the face image with an input means such as, for example, a mouse. This technology is based on the assumption that the position in the lateral direction of the face image is specified by an operator or the like, and it is time-consuming and cannot be employed in general printing circumstances. Further, there is no consideration in this technology for the problems to give a favorable impression for all print sizes in various types.

Though the technology disclosed in TOKKAIHEI No. 11-196264 is based on the assumption that the processing that digital original image data emphasize high frequency components so that the graininess sharpness may be optimum in accordance with a prescribed output size established in advance has been conducted, this assumption is not always satisfied under the printing circumstances where image data obtained by various types of photographing means are intermingled. Further, this technology does not give the condition to make the graininess sharpness to be optimum in a specific output size. In addition, no consideration is paid in this technology for the size of a primary subject occupying the image.

Though the technology disclosed in TOKKAIHEI No. 9-233423 is characterized in that the rate of a face area in the image is obtained, and the rate of edge emphasis is made to be greater gradually as the rate of the face area becomes smaller, and contrast of gradation is made to be higher gradually, only the rate of the face area in the image is made to be a factor for determining the degree of image processing, and no consideration is paid to important factors such as a difference of a size in printing of an image on a medium and a fluctuation of an observation distance caused by the difference of a size.

## SUMMARY OF THE INVENTION

In view of the aforementioned circumstances, the object of the invention is to provide an image processing method to conduct a prescribed image processing on image signals indicating a photographed image and thereby to generate image signals giving preferable output, based on a simple and all-purpose means when outputting image signals on various media in various sizes in the aforesaid image quality improvement processing to be conducted in the course of generating visual image-referred data from the scene-referred image data wherein information of broad color gamut and a luminance range obtained by an image capturing device, an image processing apparatus employing the image processing method, an image recording apparatus to give preferable output by conducting prescribed image processing on image signal indicating a photographed image by using the image processing method and a recording medium on which a program for executing the image processing method is recorded.

The object can be attained by the following method, readable product and apparatus.

A. In a method of applying an image processing onto two dimensionally-arranged image data representing a photographed image (captured image) including a main photographed-subject and producing image signals to reproduce the photographed image visually with one of various reproduction sizes on one of various kinds of recording media, the method comprises:

a reproduction size determining step of determining a reproduction size of the photographed image to be reproduced visually on a recording medium;
a subject size determining step of determining a size of the main photographed-subject on the determined reproduction size of the photographed image;
an image processing content determining step of determining a content of the image processing on the basis of the determined reproduction size of the photographed image and the determined size of the main photographed-subject; and
a processing step of applying the image processing with the determined content onto the two dimensionally-arranged image data and producing image signals to reproduce the photographed image visually with the determined reproduction size on the recording medium.

B. In an apparatus for applying an image processing onto two dimensionally-arranged image data representing a photographed image including a main photographed-subject and producing image signals to reproduce the photographed image visually with one of various reproduction sizes on one of various kinds of recording media, the apparatus comprises:

a reproduction size determining section for determining a reproduction size of the photographed image to be reproduced visually on a recording medium;

a subject size determining section for determining a size of the main photographed-subject on the determined reproduction size of the photographed image;

an image processing content determining section for determining a content of the image processing on the basis of the determined reproduction size of the photographed image and the determined size of the main photographed-subject; and

a processing section for applying the image processing with the determined content onto the two dimensionally-arranged image data and producing image signals to reproduce the photographed image visually with the determined reproduction size on the recording medium.

C. In a readable product from which a program to conduct an image processing method is read, the image processing method is a method of applying an image processing onto two dimensionally-arranged image data representing a photographed image including a main photographed-subject and producing image signals to reproduce the photographed image visually with one of various reproduction sizes on one of various kinds of recording media, the method comprises:

a reproduction size determining step of determining a reproduction size of the photographed image to be reproduced visually on a recording medium;

a subject size determining step of determining a size of the main photographed-subject on the determined reproduction size of the photographed image;

an image processing content determining step of determining a content of the image processing on the basis of the determined reproduction size of the photographed image and the determined size of the main photographed-subject; and

a processing step of applying the image processing with the determined content onto the two dimensionally-arranged image data and producing image signals to reproduce the photographed image visually with the determined reproduction size on the recording medium.

**BRIEF DESCRIPTION OF THE DRAWINGS**

Fig. 1 is a graph showing the inter-relation between an observation distance and a length of a longer side of an image.

Fig. 2 is a graph showing the inter-relation between a contrast ratio and an angle of field of a primary subject.

Fig. 3 is a graph showing the inter-relation between a sharpness emphasizing degree and an angle of field of a primary subject.

Fig. 4 is a graph showing the inter-relation between a graininess controlling degree and an angle of field of a primary subject.

Fig. 5 is a graph showing the inter-relation between a chroma emphasizing degree and an angle of field of a primary subject.

Fig. 6 is a graph showing the inter-relation between a gain of medium frequency component and an angle of field of a primary subject.

Fig. 7 is a graph showing the inter-relation between a gain of high frequency component and an angle of field of a primary subject.

Fig. 8 is an appearance structural diagram of image recording apparatus 1 to which the invention is applied.

Fig. 9 is a block diagram showing the internal structure of image recording apparatus 1 to which the invention is applied.

Fig. 10 is a functional block diagram showing functions owned by image processing section 70 shown in Fig. 9.

Fig. 11 is a flow chart illustrating image adjustment processing in image recording apparatus 1.

Fig. 12 is a flow chart illustrating estimation processing for a size of a primary subject in the photographed image in image recording apparatus 1.

Fig. 13 is a flow chart illustrating determination processing in image recording apparatus 1.

**DETAILED DESCRIPTION OF THE REFERRED EMBODIMENT**

The preferable image processing methods of the present invention will be described hereinafter.

The method described in Item 1 is represented by an image processing method that produces visual image-referred data of output image signals by conducting a predetermined image processing for captured-image data outputted from an image capturing device to optimize a visual image formation on an output medium, wherein the image processing method includes a processing content determining step that determines contents of the image processing based on an angle of field (field angle) representing a size of a main captured-subject in an output image on the basis of a viewing position when viewing the output image.

The method described in Item 2 is represented by an image processing method that produces visual image-referred data of output image signals by conducting a predetermined image processing for captured-image data outputted from an image capturing device to optimize a visual image formation on an output medium, wherein there are included a size information acquiring step that acquires a size of an output image and a size of a main captured-subject in the output image, and a processing content determining step that determines contents of the image processing based on the size of the output image and the size of the main captured-subject in the output image acquired in the size information acquiring step.

The method described in Item 3 is represented by an image processing method that produces visual image-referred data of output image signals by conducting a predetermined image processing for captured-image data outputted from an image capturing device to optimize a visual image formation on an output medium, a size estimating step that estimates a size of a main captured-subject in the output image, based on a size of the output image acquired in the size information acquiring step and a processing content determining step that determines contents of the image processing based on a size of a main captured-subject in the output image estimated in the size estimating step.

The method described in Item 4 is represented by an image processing method that produces visual image-referred data of output image signals by conducting a predetermined image processing for captured-image data outputted from an image capturing device to optimize a visual image formation on an output medium, wherein there are included a rate information acquiring step that acquires an occupying rate of a main captured-subject in the image, a size information acquiring step that acquires a size of an output image, a size estimating step that estimates a size of the main captured-subject in the output image based on the occupying rate of the main captured-subject acquired in the rate information acquiring step and the size of the output image acquired in the size information acquiring step and a processing content determining step that determines contents of the image processing based on the size of the main captured-subject in the output image estimated in the size estimating step.

The method described in Item 5 is represented by an image processing method that produces visual image-referred data of output image signals by conducting a predetermined image processing for captured-image data outputted from an image capturing device to optimize a visual image formation on an output medium, wherein there are included a condition information acquiring step that acquires information about photographing conditions, a rate estimating step that estimates an occupying rate of a main captured-subject from information about the photographing conditions acquired in the condition information acquiring step, a size information acquiring step that acquires a size of an output image, a size estimating step that estimates a size of a main captured-subject in the output image, based on information showing the occupying rate of the main captured-subject estimated in the rate estimating step and a size of the output image acquired in the size information acquiring step and a processing content determining step that determines contents of the image processing based on a size of a main captured-subject in the output image estimated in the size estimating step.

The method described in Item 6 is represented by an image processing method that produces visual image-referred data of output image signals by conducting a predetermined image processing for captured-image data outputted from an image capturing device to optimize a visual image formation on an output medium, wherein there are included a condition information acquiring step that acquires information about at least one photographing condition among a subject area, a photographing scene type, a subject distance and a detection of reflected light of electronic flash, a rate estimating step that estimates an occupying rate of a main captured-subject from information acquired in the condition information acquiring step, a size information acquiring step that acquires a size of an output image, a size estimating step that estimates a size of a main captured-subject in the output image, based on information showing the occupying rate of the main captured-subject estimated in the rate estimating step and a size of the output image acquired in the size information acquiring step and a processing content determining step that determines contents of the image processing based on a size of a main captured-subject in the output image estimated in the size estimating step.

The method described in Item 7 is the image processing method described in either one of Items 5 and 6, wherein in the condition information acquiring step, information about the photographing condition is acquired from tag information added to image signals indicating a photographed image.

The method described in Item 8 is represented by an image processing method that produces visual image-referred data of output image signals by conducting a predetermined image processing for captured-image data outputted from an image capturing device to optimize a visual image formation on an output medium, wherein there are included a rate information acquiring step that acquires an occupying rate of a main captured-subject in the image, a first size estimating step that estimates a size of an output image, a second size estimating step that estimates a size of the main captured-subject in the output image based on the occupying rate of the main captured-subject acquired in the rate information acquiring step and the size of the output image estimated in the first size estimating step and a processing content determining step that determines contents of the image processing based on the size of the main captured-subject in the output image estimated in the second size estimating step.

The method described in Item 9 is represented by an image processing method that produces visual image-referred data of output image signals by conducting a predetermined image processing for captured-image data outputted from an image capturing device to optimize a visual image formation on an output medium, wherein there are included a condition information acquiring step that acquires information about photographing conditions, a rate estimating step that estimates an occupying rate of a main captured-subject from information about the photographing conditions acquired in the condition information acquiring step, a first size estimating step that estimates a size of an output image, a second size estimating step that estimates a size of the main captured-subject in the output image based on the occupying rate of the main captured-subject estimated in the rate estimating step and the size of the output image estimated in the first size estimating step and a processing content determining step that determines contents of the image processing based on the size of the main captured-subject in the output image estimated in the second size estimating step.

The method described in Item 10 is represented by an image processing method that produces visual image-referred data of output image signals by conducting a predetermined image processing for captured-image data outputted from an image capturing device to optimize a visual image formation on an output medium, wherein there are included a condition information acquiring step that acquires information about at least one photographing condition among a subject area, a photographing scene type, a subject distance and a detection of reflected light of electronic flash, a rate estimating step that estimates an occupying rate of a main captured-subject from information regarding the photographing condition acquired in the condition information acquiring step, a first size estimating step that estimates a size of an output image from the information regarding the photographing condition acquired in the condition information acquiring step, a second size estimating step that estimates a size of the main captured-subject in the output image based on the occupying rate of the main captured-subject estimated in the rate estimating step and the size of the output image estimated in the first size estimating step and a processing content determining step that determines contents of the image processing based on the size of the main captured-subject in the output image estimated in the second size estimating step.

The method described in Item 11 is the image processing method described in either one of Items 9 and 10, wherein in the condition information acquiring step, information about the photographing condition is acquired from tag information added to image signals indicating a photographed image.

The method described in Item 12 is represented by an image processing method that produces visual image-referred data of output image signals by conducting a predetermined image processing for captured-image data outputted from an image capturing device to optimize a visual image formation on an output medium, wherein there is included a processing content changing step that changes contents of the image processing based on an angle of field of a main captured-subject that is positioned at a viewing distance for the outputted image.

The method described in Item 13 is represented by an image processing method that produces visual image-referred data of output image signals by conducting a predetermined image processing for captured-image data outputted from an image capturing device to optimize a visual image formation on an output medium, wherein there are included a size information acquiring step that acquires a size of an output image and a size of a main captured-subject in the output image, and a processing content changing step that changes contents of the image processing based on the size of the output image and the size of the main captured-subject in the output image acquired in the size information acquiring step.

The method described in Item 14 is represented by an image processing method that produces visual image-referred data of output image signals by conducting a predetermined image processing for captured-image data outputted from an image capturing device to optimize a visual image formation on an output medium, wherein there are included a size information acquiring step that acquires a size of an output image, a size estimating step that estimates a size of a main captured-subject in the output image, based on a size of the output image acquired in the size information acquiring step and a processing content changing step that changes contents of the image processing based on a size of a main captured-subject in the output image estimated in the size estimating step.

The method described in Item 15 is represented by an image processing method that produces visual image-referred data of output image signals by conducting a predetermined image processing for captured-image data outputted from an image capturing device to optimize a visual image formation on an output medium, wherein there are included a rate information acquiring step that acquires an occupying rate of a main captured-subject in the image, a size information acquiring step that acquires a size of an output image, a size estimating step that estimates a size of the main captured-subject in the output image based on the occupying rate of the main captured-subject acquired in the rate information acquiring step and the size of the output image acquired in the size information acquiring step and a processing content changing step that changes contents of the image processing based on the size of the main captured-subject in the output image estimated in the size estimating step.

The method described in Item 16 is represented by an image processing method that produces visual image-referred data of output image signals by conducting a predetermined image processing for captured-image data outputted from an image capturing device to optimize a visual image formation on an output medium, wherein there are included a condition information acquiring step that acquires information about photographing conditions, a rate estimating step that estimates an occupying rate of a main captured-subject from information about the photographing conditions acquired in the condition information acquiring step, a size information acquiring step that acquires a size of an output image, a size estimating step that estimates a size of a main captured-subject in the output image, based on information showing the occupying rate of the main captured-subject estimated in the rate estimating step and a size of the output image acquired in the size information acquiring step and processing content changing step that changes contents of the image processing based on a size of a main captured-subject in the output image estimated in the size estimating step.

The method described in Item 17 is represented by an image processing method that produces visual image-referred data of output image signals by conducting a predetermined image processing for captured-image data outputted from an image capturing device to optimize a visual image formation on an output medium, wherein there are included a condition information acquiring step that acquires information about at least one photographing condition among a subject area, a photographing scene type, a subject distance and a detection of reflected light of electronic flash, a rate estimating step that estimates an occupying rate of a main captured-subject from information acquired in the condition information acquiring step, a size information acquiring step that acquires a size of an output image, a size estimating step that estimates a size of a main captured-subject in the output image, based on information showing the occupying rate of the main captured-subject estimated in the rate estimating step and a size of the output image acquired in the size information acquiring step and processing content changing step that changes contents of the image processing based on a size of a main captured-subject in the output image estimated in the size estimating step.

The method described in Item 18 is the image processing method described in either one of Items 16 and 17, wherein in the condition information acquiring step, information about the photographing condition is acquired from tag information added to image signals indicating a photographed image.

The method described in Item 19 is represented by an image processing method that produces visual image-referred data of output image signals by conducting a predetermined image processing for captured-image data outputted from an image capturing device to optimize a visual image formation on an output medium, wherein there are included a rate information acquiring step that acquires an occupying rate of a main captured-subject in the image, a first size estimating step that estimates a size of an output image, a second size estimating step that estimates a size of the main captured-subject in the output image based on the occupying rate of the main captured-subject acquired in the rate information acquiring step and the size of the output image estimated in the first size estimating step and processing content changing step that changes contents of the image processing based on the size of the main captured-subject in the output image estimated in the second size estimating step.

The method described in Item 20 is represented by an image processing method that produces visual image-referred data of output image signals by conducting a predetermined image processing for captured-image data outputted from an image capturing device to optimize a visual image formation on an output medium, wherein there are included a condition information acquiring step that acquires information about photographing conditions, a rate estimating step that estimates an occupying rate of a main captured-subject from information about the photographing conditions acquired in the condition information acquiring step, a first size estimating step that estimates a size of an output image, a second size estimating step that estimates a size of the main captured-subject in the output image based on the occupying rate of the main captured-subject estimated in the rate estimating step and the size of the output image estimated in the first size estimating step and processing content changing step that changes contents of the image processing based on the size of the main captured-subject in the output image estimated in the second size estimating step.

The method described in Item 21 is represented by an image processing method that produces visual image-referred data of output image signals by conducting a predetermined image processing for captured-image data outputted from an image capturing device to optimize a visual image formation on an output medium, wherein there are included a condition information acquiring step that acquires information about at least one photographing condition among a subject area, a photographing scene type, a subject distance and a detection of reflected light of electronic flash, a rate estimating step that estimates an occupying rate of a main captured-subject from information regarding the photographing condition acquired in the condition information acquiring step, a first size estimating step that estimates a size of an output image from the information regarding the photographing condition acquired in the condition information acquiring step, a second size estimating step that estimates a size of the main captured-subject in the output image based on the occupying rate of the main captured-subject estimated in the rate estimating step and the size of the output image estimated in the first size estimating step and processing content changing step that changes contents of the image processing based on the size of the main captured-subject in the output image estimated in the second size estimating step.

The method described in Item 22 is the image processing method described in either one of Items 20 and 21, wherein in the condition information acquiring step, information about the photographing condition is acquired from tag information added to image signals indicating a photographed image.

The method described in Item 23 is the image processing method described in either one of Items 1 - 22, wherein there are further included a processing tendency acquiring step that acquires a tendency of image processing conducted when image signals indicating a photographed image are generated, and a correction step that corrects a level of image processing based on information showing the tendency of the image processing acquired in the processing tendency acquiring step.

The method described in Item 24 is the image processing method described in either one of Items 1 - 22, wherein there are further included a processing tendency acquiring step that acquires at least one image processing tendency among contrast processing, sharpness processing, graininess processing and chroma processing, and a correction step that corrects a level of the image processing based on information showing the tendency of the image processing acquired in the processing tendency acquiring step.

The method described in Item 25 is the image processing method described in either one of Items 23 and 24, wherein the correction step corrects, based on the tendency of image processing conducted when image signals indicating a photographed image are generated, in the form wherein overlapping and reciprocity between the contents of correction about the level of the image processing and the image processing conducted in the course of photographing are taken into consideration.

The method described in Item 26 is the image processing method described in either one of Items 23 - 25, wherein the processing tendency acquiring step acquires a tendency of the image processing conducted when image signals indicating a photographed image are generated, from tag information added to the image signals indicating the photographed image.

The method described in Item 27 is the image processing method described in either one of Items 1 - 26, wherein there are further included a preference (taste) -tendency acquiring step that acquires a preference tendency of a user and a processing level setting step that establishes a level of the image processing based on information showing the user's preference tendency acquired in the preference tendency acquiring step.

The method described in Item 28 is the image processing method described in either one of Items 1 - 26, wherein there are further included a preference tendency estimating step that estimates a preference tendency of user and a processing level setting step that establishes a level of the image processing based on information showing the user's preference tendency estimated in the preference tendency estimating step.

The method described in Item 29 is the image processing method described in either one of Items 1 - 26, wherein there are further included an establishment information acquiring step that acquires at least one piece of information about setting of a model of photographing apparatus, the number of pixels for photographing, exposure mode and white balance, a preference tendency estimating step that estimates a user's preference tendency from the information acquired in the establishment information acquiring step and a processing level setting step that establishes a level of the image processing based on information showing the user's preference tendency estimated in the preference tendency estimating step.

The method described in Item 30 is the image processing method described in either one of Items 1 - 26, wherein there are further included a preference tendency acquiring step that acquires a preference tendency of a user and a processing level revising step that revises a level of the image processing based on information showing the user's preference tendency acquired in the preference tendency acquiring step.

The method described in Item 31 is the image processing method described in either one of Items 1 - 26, wherein there are further included a preference tendency estimating step that estimates a preference tendency of user (the tendency of user's taste) and a processing level revising step that revises a level of the image processing based on information showing the user's preference tendency estimated in the preference tendency estimating step.

The method described in Item 32 is the image processing method described in either one of Items 1 - 26, wherein there are further included an establishment information acquiring step that acquires at least one piece of information about setting of a model of photographing apparatus, the number of pixels for photographing, exposure mode and white balance, a preference tendency estimating step that estimates a user's preference tendency from the information acquired in the establishment information acquiring step and a processing level revising step that revises a level of the image processing based on information showing the user's preference tendency estimated in the preference tendency estimating step.

The method described in Item 33 is the image processing method described in either one of Items 27 - 32, wherein there is further included a preference judging information acquiring step that acquires preference judging information used for acquiring or estimating a user's preference from tag information added to the image signals indicating the photographed image.

The method described in Item 34 is the image processing method described in either one of Items 1 - 33, wherein there are further included an field angle estimating step that estimates an angle of field by which a main captured-subject is covered when an image is observed and a content changing step that changes contents of the image processing according to the angle of field estimated in the field angle estimating step.

The method described in Item 35 is the image processing method described in Item 34, wherein there is further included a content changing step that changes contents of the image processing depending on whether the angle of field estimated in the field angle estimating step can be covered by or ranged within a reference field angle obtained with a sense of experience on the basis of tone and lightness or one of them.

The method described in Item 36 is the image processing method described in Item 35, wherein there is further included a contrast-increasing step that increases contrast more for the smaller angle of field, when the angle of field estimated in the field angle estimating step is smaller than the reference field angle.

The method described in Item 37 is the image processing method described in Item 34, wherein there is further included a step to increase contrast by 5% or more that increases contrast 5% or more when the angle of field estimated in the field angle estimating step is smaller than the reference field angle.

The method described in Item 38 is the image processing method described in Item 34, wherein there is further included a contrast-reduction step that reduces contrast more for the greater angle of field, when the angle of field estimated in the field angle estimating step is greater than the reference field angle.

The method described in Item 39 is the image processing method described in Item 34, wherein there is further included a step to decrease contrast by 5% or more that decreases contrast 5% or more when the angle of field estimated in the field angle estimating step is greater than the reference field angle.

The method described in Item 40 is the image processing method described in Item 34, wherein there is further included an enhancement processing step that conducts edge enhancement or high-frequency component enhancement processing more for the smaller angle of field, when the angle of field estimated in the field angle estimating step is smaller than the reference field angle.

The method described in Item 41 is the image processing method described in Item 34, wherein there is further included an inhibition processing step that conducts removal of granulated noise or medium frequency component inhibition processing more for the greater angle of field, when the angle of field estimated in the field angle estimating step is greater than the reference field angle.

The method described in Item 42 is the image processing method described in Item 34, wherein there is further included a chroma enhancement step that enhances chroma more for the smaller angle of field when the angle of field estimated in the field angle estimating step is smaller than the reference field angle.

The method described in Item 43 is the image processing method described in Item 34, wherein there is further included a chroma enhancement step that enhances chroma more for the greater angle of field when the angle of field estimated in the field angle estimating step is greater than the reference field angle.

A recording medium described in Item 44 records a program to conduct the image processing method described in any one of Items 1 to 43.

The structure described in Item 45 is represented by an image processing apparatus that produces visual image-referred data of output image signals by conducting a predetermined image processing for captured-image data outputted from an image capturing device to optimize the captured-image data for viewing, wherein the image processing apparatus includes a processing content determining means that determines contents of the image processing based on an angle of field (field angle) representing a size of a main captured-subject in an output image on the basis of a viewing position when viewing the output image.

The structure described in Item 46 is represented by an image processing apparatus that produces visual image-referred data of output image signals by conducting a predetermined image processing for captured-image data outputted from an image capturing device to optimize the captured-image data for viewing, wherein there are included a size information acquiring means that acquires a size of an output image and a size of a main captured-subject in the output image, and a processing content determining means that determines contents of the image processing based on the size of the output image and the size of the main captured-subject in the output image acquired in the size information acquiring means.

The structure described in Item 47 is represented by an image processing apparatus that produces visual image-referred data of output image signals by conducting a predetermined image processing for captured-image data outputted from an image capturing device to optimize the captured-image data for viewing, wherein there are included a size information acquiring means that acquires a size of an output image, a size estimating means that estimates a size of a main captured-subject in the output image, based on a size of the output image acquired in the size information acquiring means and a processing content determining means that determines contents of the image processing based on a size of a main captured-subject in the output image estimated in the size estimating means.

The structure described in Item 48 is represented by an image processing apparatus that produces visual image-referred data of output image signals by conducting a predetermined image processing for captured-image data outputted from an image capturing device to optimize the captured-image data for viewing, wherein there are included a rate information acquiring means that acquires an occupying rate of a main captured-subject in the image, a size information acquiring means that acquires a size of an output image, a size estimating means that estimates a size of the main captured-subject in the output image based on the occupying rate of the main captured-subject acquired in the rate information acquiring means and the size of the output image acquired in the size information acquiring means and a processing content determining means that determines contents of the image processing based on the size of the main captured-subject in the output image estimated in the size estimating means.

The structure described in Item 49 is represented by an image processing apparatus that produces visual image-referred data of output image signals by conducting a predetermined image processing for captured-image data outputted from an image capturing device to optimize the captured-image data for viewing, wherein there are included a condition information acquiring means that acquires information about photographing conditions, a rate estimating means that estimates an occupying rate of a main captured-subject from information about the photographing conditions acquired in the condition information acquiring means, a size information acquiring means that acquires a size of an output image, a size estimating means that estimates a size of a main captured-subject in the output image, based on information showing the occupying rate of the main captured-subject estimated in the rate estimating means and a size of the output image acquired in the size information acquiring means and a processing content determining means that determines contents of the image processing based on a size of a main captured-subject in the output image estimated in the size estimating means.

The structure described in Item 50 is represented by an image processing apparatus that produces visual image-referred data of output image signals by conducting a predetermined image processing for captured-image data outputted from an image capturing device to optimize the captured-image data for viewing, wherein there are included a condition information acquiring means that acquires information about at least one photographing condition among a subject area, a photographing scene type, a subject distance and a detection of reflected light of electronic flash, a rate estimating means that estimates an occupying rate of a main captured-subject from information acquired in the condition information acquiring means, a size information acquiring means that acquires a size of an output image, a size estimating means that estimates a size of a main captured-subject in the output image, based on information showing the occupying rate of the main captured-subject estimated in the rate estimating means and a size of the output image acquired in the size information acquiring means and a processing content determining means that determines contents of the image processing based on a size of a main captured-subject in the output image estimated in the size estimating means.

The structure described in Item 51 is the image processing apparatus described in either one of Items 49 and 50, wherein in the condition information acquiring means, information about the photographing condition is acquired from tag information added to image signals indicating a photographed image.

The structure described in Item 52 is represented by an image processing apparatus that produces visual image-referred data of output image signals by conducting a predetermined image processing for captured-image data outputted from an image capturing device to optimize the captured-image data for viewing, wherein there are included a rate information acquiring means that acquires an occupying rate of a main captured-subject in the image, a first size estimating means that estimates a size of an output image, a second size estimating means that estimates a size of the main captured-subject in the output image based on the occupying rate of the main captured-subject acquired in the rate information acquiring means and the size of the output image estimated in the first size estimating means and a processing content determining means that determines contents of the image processing based on the size of the main captured-subject in the output image estimated in the second size estimating means.

The structure described in Item 53 is represented by an image processing apparatus that produces visual image-referred data of output image signals by conducting a predetermined image processing for captured-image data outputted from an image capturing device to optimize the captured-image data for viewing, wherein there are included a condition information acquiring means that acquires information about photographing conditions, a rate estimating means that estimates an occupying rate of a main captured-subject from information about the photographing conditions acquired in the condition information acquiring means, a first size estimating means that estimates a size of an output image, a second size estimating means that estimates a size of the main captured-subject in the output image based on the occupying rate of the main captured-subject estimated in the rate estimating means and the size of the output image estimated in the first size estimating means and a processing content determining means that determines contents of the image processing based on the size of the main captured-subject in the output image estimated in the second size estimating means.

The structure described in Item 54 is represented by an image processing apparatus that produces visual image-referred data of output image signals by conducting a predetermined image processing for captured-image data outputted from an image capturing device to optimize the captured-image data for viewing, wherein there are included a condition information acquiring means that acquires information about at least one photographing condition among a subject area, a photographing scene type, a subject distance and a detection of reflected light of electronic flash, a rate estimating means that estimates an occupying rate of a main captured-subject from information regarding the photographing condition acquired in the condition information acquiring means, a first size estimating means that estimates a size of an output image from the information regarding the photographing condition acquired in the condition information acquiring means, a second size estimating means that estimates a size of the main captured-subject in the output image based on the occupying rate of the main captured-subject estimated in the rate estimating means and the size of the output image estimated in the first size estimating means and a processing content determining means that determines contents of the image processing based on the size of the main captured-subject in the output image estimated in the second size estimating means.

The structure described in Item 55 is the image processing apparatus described in either one of Items 53 and 54, wherein in the condition information acquiring means, information about the photographing condition is acquired from tag information added to image signals indicating a photographed image.

The structure described in Item 56 is represented by an image processing apparatus that produces visual image-referred data of output image signals by conducting a predetermined image processing for captured-image data outputted from an image capturing device to optimize the captured-image data for viewing, wherein the image processing apparatus includes a processing content changing means that changes contents of the image processing based on an angle of field (field angle) representing a size of a main captured-subject in an output image on the basis of a viewing position when viewing the output image.

The structure described in Item 57 is represented by an image processing apparatus that produces visual image-referred data of output image signals by conducting a predetermined image processing for captured-image data outputted from an image capturing device to optimize the captured-image data for viewing, wherein there are included a size information acquiring means that acquires a size of an output image and a size of a main captured-subject in the output image, and a processing content changing means that changes contents of the image processing based on the size of the output image and the size of the main captured-subject in the output image acquired in the size information acquiring means.

The structure described in Item 58 is represented by an image processing apparatus that produces visual image-referred data of output image signals by conducting a predetermined image processing for captured-image data outputted from an image capturing device to optimize the captured-image data for viewing, wherein there are included a size information acquiring means that acquires a size of an output image, a size estimating means that estimates a size of a main captured-subject in the output image, based on a size of the output image acquired in the size information acquiring means and a processing content changing means that changes contents of the image processing based on a size of a main captured-subject in the output image estimated in the size estimating means.

The structure described in Item 59 is represented by an image processing apparatus that produces visual image-referred data of output image signals by conducting a predetermined image processing for captured-image data outputted from an image capturing device to optimize the captured-image data for viewing, wherein there are included a rate information acquiring means that acquires an occupying rate of a main captured-subject in the image, a size information acquiring means that acquires a size of an output image, a size estimating means that estimates a size of the main captured-subject in the output image based on the occupying rate of the main captured-subject acquired in the rate information acquiring means and the size of the output image acquired in the size information acquiring means and a processing content changing means that changes contents of the image processing based on the size of the main captured-subject in the output image estimated in the size estimating means.

The structure described in Item 60 is represented by an image processing apparatus that produces visual image-referred data of output image signals by conducting a predetermined image processing for captured-image data outputted from an image capturing device to optimize the captured-image data for viewing, wherein there are included a condition information acquiring means that acquires information about photographing conditions, a rate estimating means that estimates an occupying rate of a main captured-subject from information about the photographing conditions acquired in the condition information acquiring means, a size information acquiring means that acquires a size of an output image, a size estimating means that estimates a size of a main captured-subject in the output image, based on information showing the occupying rate of the main captured-subject estimated in the rate estimating means and a size of the output image acquired in the size information acquiring means and processing content changing means that changes contents of the image processing based on a size of a main captured-subject in the output image estimated in the size estimating means.

The structure described in Item 61 is represented by an image processing apparatus that produces visual image-referred data of output image signals by conducting a predetermined image processing for captured-image data outputted from an image capturing device to optimize the captured-image data for viewing, wherein there are included a condition information acquiring means that acquires information about at least one photographing condition among a subject area, a photographing scene type, a subject distance and a detection of reflected light of electronic flash, a rate estimating means that estimates an occupying rate of a main captured-subject from information acquired in the condition information acquiring means, a size information acquiring means that acquires a size of an output image, a size estimating means that estimates a size of a main captured-subject in the output image, based on information showing the occupying rate of the main captured-subject estimated in the rate estimating means and a size of the output image acquired in the size information acquiring means and processing content changing means that changes contents of the image processing based on a size of a main captured-subject in the output image estimated in the size estimating means.

The structure described in Item 62 is the image processing apparatus described in either one of Items 60 and 61, wherein in the condition information acquiring means, information about the photographing condition is acquired from tag information added to image signals indicating a photographed image.

The structure described in Item 63 is represented by an image processing apparatus that produces visual image-referred data of output image signals by conducting a predetermined image processing for captured-image data outputted from an image capturing device to optimize the captured-image data for viewing, wherein there are included a rate information acquiring means that acquires an occupying rate of a main captured-subject in the image, a first size estimating means that estimates a size of an output image, a second size estimating means that estimates a size of the main captured-subject in the output image based on the occupying rate of the main captured-subject acquired in the rate information acquiring means and the size of the output image estimated in the first size estimating means and processing content changing means that changes contents of the image processing based on the size of the main captured-subject in the output image estimated in the second size estimating means.

The structure described in Item 64 is represented by an image processing apparatus that produces visual image-referred data of output image signals by conducting a predetermined image processing for captured-image data outputted from an image capturing device to optimize the captured-image data for viewing, wherein there are included a condition information acquiring means that acquires information about photographing conditions, a rate estimating means that estimates an occupying rate of a main captured-subject from information about the photographing conditions acquired in the condition information acquiring means, a first size estimating means that estimates a size of an output image, a second size estimating means that estimates a size of the main captured-subject in the output image based on the occupying rate of the main captured-subject estimated in the rate estimating means and the size of the output image estimated in the first size estimating means and processing content changing means that changes contents of the image processing based on the size of the main captured-subject in the output image estimated in the second size estimating means.

The structure described in Item 65 is represented by an image processing apparatus that produces visual image-referred data of output image signals by conducting a predetermined image processing for captured-image data outputted from an image capturing device to optimize the captured-image data for viewing, wherein there are included a condition information acquiring means that acquires information about at least one photographing condition among a subject area, a photographing scene type, a subject distance and a detection of reflected light of electronic flash, a rate estimating means that estimates an occupying rate of a main captured-subject from information regarding the photographing condition acquired in the condition information acquiring means, a first size estimating means that estimates a size of an output image from the information regarding the photographing condition acquired in the condition information acquiring means, a second size estimating means that estimates a size of the main captured-subject in the output image based on the occupying rate of the main captured-subject estimated in the rate estimating means and the size of the output image estimated in the first size estimating means and processing content changing means that changes contents of the image processing based on the size of the main captured-subject in the output image estimated in the second size estimating means.

The structure described in Item 66 is the image processing apparatus described in either one of Items 64 and 65, wherein in the condition information acquiring means, information about the photographing condition is acquired from tag information added to image signals indicating a photographed image.

The structure described in Item 67 is the image processing apparatus described in either one of Items 45 - 66, wherein there are further included a processing tendency acquiring means that acquires a tendency of image processing conducted when image signals indicating a photographed image are generated, and a correction means that corrects a level of image processing based on information showing the tendency of the image processing acquired in the processing tendency acquiring means.

The structure described in Item 68 is the image processing apparatus described in either one of Items 45 - 66, wherein there are further included a processing tendency acquiring means that acquires at least one image processing tendency among contrast processing, sharpness processing, graininess processing and chroma processing, and a correction means that corrects a level of the image processing based on information showing the tendency of the image processing acquired in the processing tendency acquiring means.

The structure described in Item 69 is the image processing apparatus described in either one of Items 67 and 68, wherein the correction means corrects, based on the tendency of image processing conducted when image signals indicating a photographed image are generated, in the form wherein overlapping and reciprocity between the contents of correction about the level of the image processing and the image processing conducted in the course of photographing are taken into consideration.

The structure described in Item 70 is the image processing apparatus described in either one of Items 67 - 69, wherein the processing tendency acquiring means acquires a tendency of the image processing conducted when image signals indicating a photographed image are generated, from tag information added to the image signals indicating the photographed image.

The structure described in Item 71 is the image processing apparatus described in either one of Items 45 - 70, wherein there are further included a preference tendency acquiring means that acquires a preference tendency of a user and a processing level setting means that establishes a level of the image processing based on information showing the user's preference tendency acquired in the preference tendency acquiring means.

The structure described in Item 72 is the image processing apparatus described in either one of Items 45 - 70, wherein there are further included a preference tendency estimating means that estimates a preference tendency of user and a processing level setting means that establishes a level of the image processing based on information showing the user's preference tendency estimated in the preference tendency estimating means.

The structure described in Item 73 is the image processing apparatus described in either one of Items 45 - 70, wherein there are further included an establishment information acquiring means that acquires at least one piece of information about setting of a model of photographing apparatus, the number of pixels for photographing, exposure mode and white balance, a preference tendency estimating means that estimates a user's preference tendency from the information acquired in the establishment information acquiring means and a processing level setting means that establishes a level of the image processing based on information showing the user's preference tendency estimated in the preference tendency estimating means.

The structure described in Item 74 is the image processing apparatus described in either one of Items 45 - 70, wherein there are further included a preference tendency acquiring means that acquires a preference tendency of a user and a processing level revising means that revises a level of the image processing based on information showing the user's preference tendency acquired in the preference tendency acquiring means.

The structure described in Item 75 is the image processing apparatus described in either one of Items 45 - 70, wherein there are further included a preference tendency estimating means that estimates a preference tendency of user and a processing level revising means that revises a level of the image processing based on information showing the user's preference tendency estimated in the preference tendency estimating means.

The structure described in Item 76 is the image processing apparatus described in either one of Items 45 - 70, wherein there are further included an establishment information acquiring means that acquires at least one piece of information about setting of a model of photographing apparatus, the number of pixels for photographing, exposure mode and white balance, a preference tendency estimating means that estimates a user's preference tendency from the information acquired in the establishment information acquiring means and a processing level revising means that revises a level of the image processing based on information showing the user's preference tendency estimated in the preference tendency estimating means.

The structure described in Item 77 is the image processing apparatus described in either one of Items 71 - 76, wherein there is further included a preference judging information acquiring means that acquires preference judging information used for acquiring or estimating a user's preference from tag information added to the image signals indicating the photographed image.

The structure described in Item 78 is the image processing apparatus described in either one of Items 45 - 77, wherein there are further included an field angle estimating means that estimates an angle of field by which a main captured-subject is covered when an image is observed and a content changing means that changes contents of the image processing according to the angle of field estimated in the field angle estimating means.

The structure described in Item 79 is the image processing apparatus described in Item 78, wherein there is further included a content changing means that changes contents of the image processing depending on whether the angle of field estimated in the field angle estimating means can be covered by or ranged within a reference field angle obtained with a sense of experience on the basis of tone and lightness or one of them.

The structure described in Item 80 is the image processing apparatus described in Item 78, wherein there is further included a contrast-increasing means that increases contrast more for the smaller angle of field, when the angle of field estimated in the field angle estimating means is smaller than the reference field angle.

The structure described in Item 81 is the image processing apparatus described in Item 78, wherein there is further included a means to increase contrast by 5% or more that increases contrast 5% or more when the angle of field estimated in the field angle estimating means is smaller than the reference field angle.

The structure described in Item 82 is the image processing apparatus described in Item 78, wherein there is further included a contrast-reduction means that reduces contrast more for the greater angle of field, when the angle of field estimated in the field angle estimating means is greater than the reference field angle.

The structure described in Item 83 is the image processing apparatus described in Item 78, wherein there is further included a means to decrease contrast by 5% or more that decreases contrast 5% or more when the angle of field estimated in the field angle estimating means is greater than the reference field angle.

The structure described in Item 84 is the image processing apparatus described in Item 78, wherein there is further included an enhancement processing means that conducts edge enhancement or high-frequency component enhancement processing more for the smaller angle of field, when the angle of field estimated in the field angle estimating means is smaller than the reference field angle.

The structure described in Item 85 is the image processing apparatus described in Item 78, wherein there is further included an inhibition processing means that conducts removal of granulated noise or medium frequency component inhibition processing more for the greater angle of field, when the angle of field estimated in the field angle estimating means is greater than the reference field angle.

The structure described in Item 86 is the image processing apparatus described in Item 78, wherein there is further included a chroma enhancement means that enhances chroma more for the smaller angle of field when the angle of field estimated in the field angle estimating means is smaller than the reference field angle.

The structure described in Item 87 is the image processing apparatus described in Item 78, wherein there is further included a chroma enhancement means that enhances chroma more for the greater angle of field when the angle of field estimated in the field angle estimating means is greater than the reference field angle.

The structure described in Item 88 is represented by an image recording apparatus provided with a recording means to produce visual image-referred data of output image signals by conducting a predetermined image processing for captured-image data outputted from an image capturing device to optimize a visual image formation on an output medium and to record the visual image-referred data, wherein the image recording apparatus includes a processing content determining means that determines contents of the image processing based on an angle of field (field angle) representing a size of a main captured-subject in an output image on the basis of a viewing position when viewing the output image.

The structure described in Item 89 is represented by an image recording apparatus provided with a recording means to produce visual image-referred data of output image signals by conducting a predetermined image processing for captured-image data outputted from an image capturing device to optimize a visual image formation on an output medium and to record the visual image-referred data, wherein there are included a size information acquiring means that acquires a size of an output image and a size of a main captured-subject in the output image, and a processing content determining means that determines contents of the image processing based on the size of the output image and the size of the main captured-subject in the output image acquired in the size information acquiring means.

The structure described in Item 90 is represented by an image recording apparatus provided with a recording means to produce visual image-referred data of output image signals by conducting a predetermined image processing for captured-image data outputted from an image capturing device to optimize a visual image formation on an output medium and to record the visual image-referred data, wherein there are included a size information acquiring means that acquires a size of an output image, a size estimating means that estimates a size of a main captured-subject in the output image, based on a size of the output image acquired in the size information acquiring means and a processing content determining means that determines contents of the image processing based on a size of a main captured-subject in the output image estimated in the size estimating means.

The structure described in Item 91 is represented by an image recording apparatus provided with a recording means to produce visual image-referred data of output image signals by conducting a predetermined image processing for captured-image data outputted from an image capturing device to optimize a visual image formation on an output medium and to record the visual image-referred data, wherein there are included a rate information acquiring means that acquires an occupying rate of a main captured-subject in the image, a size information acquiring means that acquires a size of an output image, a size estimating means that estimates a size of the main captured-subject in the output image based on the occupying rate of the main captured-subject acquired in the rate information acquiring means and the size of the output image acquired in the size information acquiring means and a processing content determining means that determines contents of the image processing based on the size of the main captured-subject in the output image estimated in the size estimating means.

The structure described in Item 92 is represented by an image recording apparatus provided with a recording means to produce visual image-referred data of output image signals by conducting a predetermined image processing for captured-image data outputted from an image capturing device to optimize a visual image formation on an output medium and to record the visual image-referred data, wherein there are included a condition information acquiring means that acquires information about photographing conditions, a rate estimating means that estimates an occupying rate of a main captured-subject from information about the photographing conditions acquired in the condition information acquiring means, a size information acquiring means that acquires a size of an output image, a size estimating means that estimates a size of a main captured-subject in the output image, based on information showing the occupying rate of the main captured-subject estimated in the rate estimating means and a size of the output image acquired in the size information acquiring means and a processing content determining means that determines contents of the image processing based on a size of a main captured-subject in the output image estimated in the size estimating means.

The structure described in Item 93 is represented by an image recording apparatus provided with a recording means to produce visual image-referred data of output image signals by conducting a predetermined image processing for captured-image data outputted from an image capturing device to optimize a visual image formation on an output medium and to record the visual image-referred data, wherein there are included a condition information acquiring means that acquires information about at least one photographing condition among a subject area, a photographing scene type, a subject distance and a detection of reflected light of electronic flash, a rate estimating means that estimates an occupying rate of a main captured-subject from information acquired in the condition information acquiring means, a size information acquiring means that acquires a size of an output image, a size estimating means that estimates a size of a main captured-subject in the output image, based on information showing the occupying rate of the main captured-subject estimated in the rate estimating means and a size of the output image acquired in the size information acquiring means and a processing content determining means that determines contents of the image processing based on a size of a main captured-subject in the output image estimated in the size estimating means.

The structure described in Item 94 is the image recording apparatus described in either one of Items 92 and 93, wherein in the condition information acquiring means, information about the photographing condition is acquired from tag information added to image signals indicating a photographed image.

The structure described in Item 95 is represented by an image recording apparatus provided with a recording means to produce visual image-referred data of output image signals by conducting a predetermined image processing for captured-image data outputted from an image capturing device to optimize a visual image formation on an output medium and to record the visual image-referred data, wherein there are included a rate information acquiring means that acquires an occupying rate of a main captured-subject in the image, a first size estimating means that estimates a size of an output image, a second size estimating means that estimates a size of the main captured-subject in the output image based on the occupying rate of the main captured-subject acquired in the rate information acquiring means and the size of the output image estimated in the first size estimating means and a processing content determining means that determines contents of the image processing based on the size of the main captured-subject in the output image estimated in the second size estimating means.

The structure described in Item 96 is represented by an image recording apparatus provided with a recording means to produce visual image-referred data of output image signals by conducting a predetermined image processing for captured-image data outputted from an image capturing device to optimize a visual image formation on an output medium and to record the visual image-referred data, wherein there are included a condition information acquiring means that acquires information about photographing conditions, a rate estimating means that estimates an occupying rate of a main captured-subject from information about the photographing conditions acquired in the condition information acquiring means, a first size estimating means that estimates a size of an output image, a second size estimating means that estimates a size of the main captured-subject in the output image based on the occupying rate of the main captured-subject estimated in the rate estimating means and the size of the output image estimated in the first size estimating means and a processing content determining means that determines contents of the image processing based on the size of the main captured-subject in the output image estimated in the second size estimating means.

The structure described in Item 97 is represented by an image recording apparatus provided with a recording means to produce visual image-referred data of output image signals by conducting a predetermined image processing for captured-image data outputted from an image capturing device to optimize a visual image formation on an output medium and to record the visual image-referred data, wherein there are included a condition information acquiring means that acquires information about at least one photographing condition among a subject area, a photographing scene type, a subject distance and a detection of reflected light of electronic flash, a rate estimating means that estimates an occupying rate of a main captured-subject from information regarding the photographing condition acquired in the condition information acquiring means, a first size estimating means that estimates a size of an output image from the information regarding the photographing condition acquired in the condition information acquiring means, a second size estimating means that estimates a size of the main captured-subject in the output image based on the occupying rate of the main captured-subject estimated in the rate estimating means and the size of the output image estimated in the first size estimating means and a processing content determining means that determines contents of the image processing based on the size of the main captured-subject in the output image estimated in the second size estimating means.

The structure described in Item 98 is the image recording apparatus described in either one of Items 96 and 97, wherein in the condition information acquiring means, information about the photographing condition is acquired from tag information added to image signals indicating a photographed image.

The structure described in Item 99 is represented by an image recording apparatus provided with a recording means to produce visual image-referred data of output image signals by conducting a predetermined image processing for captured-image data outputted from an image capturing device to optimize a visual image formation on an output medium and to record the visual image-referred data, wherein the image recording apparatus includes a processing content changing means that changes contents of the image processing based on an angle of field (field angle) representing a size of a main captured-subject in an output image on the basis of a viewing position when viewing the output image.

The structure described in Item 100 is represented by an image recording apparatus provided with a recording means to produce visual image-referred data of output image signals by conducting a predetermined image processing for captured-image data outputted from an image capturing device to optimize a visual image formation on an output medium and to record the visual image-referred data, wherein there are included a size information acquiring means that acquires a size of an output image and a size of a main captured-subject in the output image, and a processing content changing means that changes contents of the image processing based on the size of the output image and the size of the main captured-subject in the output image acquired in the size information acquiring means.

The structure described in Item 101 is represented by an image recording apparatus provided with a recording means to produce visual image-referred data of output image signals by conducting a predetermined image processing for captured-image data outputted from an image capturing device to optimize a visual image formation on an output medium and to record the visual image-referred data, wherein there are included a size information acquiring means that acquires a size of an output image, a size estimating means that estimates a size of a main captured-subject in the output image, based on a size of the output image acquired in the size information acquiring means and a processing content changing means that changes contents of the image processing based on a size of a main captured-subject in the output image estimated in the size estimating means.

The structure described in Item 102 is represented by an image recording apparatus provided with a recording means to produce visual image-referred data of output image signals by conducting a predetermined image processing for captured-image data outputted from an image capturing device to optimize a visual image formation on an output medium and to record the visual image-referred data, wherein there are included a rate information acquiring means that acquires an occupying rate of a main captured-subject in the image, a size information acquiring means that acquires a size of an output image, a size estimating means that estimates a size of the main captured-subject in the output image based on the occupying rate of the main captured-subject acquired in the rate information acquiring means and the size of the output image acquired in the size information acquiring means and a processing content changing means that changes contents of the image processing based on the size of the main captured-subject in the output image estimated in the size estimating means.

The structure described in Item 103 is represented by an image recording apparatus provided with a recording means to produce visual image-referred data of output image signals by conducting a predetermined image processing for captured-image data outputted from an image capturing device to optimize a visual image formation on an output medium and to record the visual image-referred data, wherein there are included a condition information acquiring means that acquires information about photographing conditions, a rate estimating means that estimates an occupying rate of a main captured-subject from information about the photographing conditions acquired in the condition information acquiring means, a size information acquiring means that acquires a size of an output image, a size estimating means that estimates a size of a main captured-subject in the output image, based on information showing the occupying rate of the main captured-subject estimated in the rate estimating means and a size of the output image acquired in the size information acquiring means and processing content changing means that changes contents of the image processing based on a size of a main captured-subject in the output image estimated in the size estimating means.

The structure described in Item 104 is represented by an image recording apparatus provided with a recording means to produce visual image-referred data of output image signals by conducting a predetermined image processing for captured-image data outputted from an image capturing device to optimize a visual image formation on an output medium and to record the visual image-referred data, wherein there are included a condition information acquiring means that acquires information about at least one photographing condition among a subject area, a photographing scene type, a subject distance and a detection of reflected light of electronic flash, a rate estimating means that estimates an occupying rate of a main captured-subject from information acquired in the condition information acquiring means, a size information acquiring means that acquires a size of an output image, a size estimating means that estimates a size of a main captured-subject in the output image, based on information showing the occupying rate of the main captured-subject estimated in the rate estimating means and a size of the output image acquired in the size information acquiring means and processing content changing means that changes contents of the image processing based on a size of a main captured-subject in the output image estimated in the size estimating means.

The structure described in Item 105 is the image recording apparatus described in either one of Items 103 and 104, wherein in the condition information acquiring means, information about the photographing condition is acquired from tag information added to image signals indicating a photographed image.

The structure described in Item 106 is represented by an image recording apparatus provided with a recording means to produce visual image-referred data of output image signals by conducting a predetermined image processing for captured-image data outputted from an image capturing device to optimize a visual image formation on an output medium and to record the visual image-referred data, wherein there are included a rate information acquiring means that acquires an occupying rate of a main captured-subject in the image, a first size estimating means that estimates a size of an output image, a second size estimating means that estimates a size of the main captured-subject in the output image based on the occupying rate of the main captured-subject acquired in the rate information acquiring means and the size of the output image estimated in the first size estimating means and processing content changing means that changes contents of the image processing based on the size of the main captured-subject in the output image estimated in the second size estimating means.

The structure described in Item 107 is represented by an image recording apparatus provided with a recording means to produce visual image-referred data of output image signals by conducting a predetermined image processing for captured-image data outputted from an image capturing device to optimize a visual image formation on an output medium and to record the visual image-referred data, wherein there are included a condition information acquiring means that acquires information about photographing conditions, a rate estimating means that estimates an occupying rate of a main captured-subject from information about the photographing conditions acquired in the condition information acquiring means, a first size estimating means that estimates a size of an output image, a second size estimating means that estimates a size of the main captured-subject in the output image based on the occupying rate of the main captured-subject estimated in the rate estimating means and the size of the output image estimated in the first size estimating means and processing content changing means that changes contents of the image processing based on the size of the main captured-subject in the output image estimated in the second size estimating means.

The structure described in Item 108 is represented by an image recording apparatus provided with a recording means to produce visual image-referred data of output image signals by conducting a predetermined image processing for captured-image data outputted from an image capturing device to optimize a visual image formation on an output medium and to record the visual image-referred data, wherein there are included a condition information acquiring means that acquires information about at least one photographing condition among a subject area, a photographing scene type, a subject distance and a detection of reflected light of electronic flash, a rate estimating means that estimates an occupying rate of a main captured-subject from information regarding the photographing condition acquired in the condition information acquiring means, a first size estimating means that estimates a size of an output image from the information regarding the photographing condition acquired in the condition information acquiring means, a second size estimating means that estimates a size of the main captured-subject in the output image based on the occupying rate of the main captured-subject estimated in the rate estimating means and the size of the output image estimated in the first size estimating means and processing content changing means that changes contents of the image processing based on the size of the main captured-subject in the output image estimated in the second size estimating means.

The structure described in Item 109 is the image recording apparatus described in either one of Items 107 and 108, wherein in the condition information acquiring means, information about the photographing condition is acquired from tag information added to image signals indicating a photographed image.

The structure described in Item 110 is the image recording apparatus described in either one of Items 88 - 109, wherein there are further included a processing tendency acquiring means that acquires a tendency of image processing conducted when image signals indicating a photographed image are generated, and a correction means that corrects a level of image processing based on information showing the tendency of the image processing acquired in the processing tendency acquiring means.

The structure described in Item 111 is the image recording apparatus described in either one of Items 88 - 109, wherein there are further included a processing tendency acquiring means that acquires at least one image processing tendency among contrast processing, sharpness processing, graininess processing and chroma processing, and a correction means that corrects a level of the image processing based on information showing the tendency of the image processing acquired in the processing tendency acquiring means.

The structure described in Item 112 is the image recording apparatus described in either one of Items 110 and 111, wherein the correction means corrects, based on the tendency of image processing conducted when image signals indicating a photographed image are generated, in the form wherein overlapping and reciprocity between the contents of correction about the level of the image processing and the image processing conducted in the course of photographing are taken into consideration.

The structure described in Item 113 is the image recording apparatus described in either one of Items 110 - 112, wherein the processing tendency acquiring means acquires a tendency of the image processing conducted when image signals indicating a photographed image are generated, from tag information added to the image signals indicating the photographed image.

The structure described in Item 114 is the image recording apparatus described in either one of Items 88 - 113, wherein there are further included a preference tendency acquiring means that acquires a preference tendency of a user and a processing level setting means that establishes a level of the image processing based on information showing the user's preference tendency acquired in the preference tendency acquiring means.

The structure described in Item 115 is the image recording apparatus described in either one of Items 88 - 113, wherein there are further included a preference tendency estimating means that estimates a preference tendency of user and a processing level setting means that establishes a level of the image processing based on information showing the user's preference tendency estimated in the preference tendency estimating means.

The structure described in Item 116 is the image recording apparatus described in either one of Items 88 - 113, wherein there are further included an establishment information acquiring means that acquires at least one piece of information about setting of a model of photographing apparatus, the number of pixels for photographing, exposure mode and white balance, a preference tendency estimating means that estimates a user's preference tendency from the information acquired in the establishment information acquiring means and a processing level setting means that establishes a level of the image processing based on information showing the user's preference tendency estimated in the preference tendency estimating means.

The structure described in Item 117 is the image recording apparatus described in either one of Items 88 - 113, wherein there are further included a preference tendency acquiring means that acquires a preference tendency of a user and a processing level revising means that revises a level of the image processing based on information showing the user's preference tendency acquired in the preference tendency acquiring means.

The structure described in Item 118 is the image recording apparatus described in either one of Items 88 - 113, wherein there are further included a preference tendency estimating means that estimates a preference tendency of user and a processing level revising means that revises a level of the image processing based on information showing the user's preference tendency estimated in the preference tendency estimating means.

The structure described in Item 119 is the image recording apparatus described in either one of Items 88 - 70, wherein there are further included an establishment information acquiring means that acquires at least one piece of information about setting of a model of photographing apparatus, the number of pixels for photographing, exposure mode and white balance, a preference tendency estimating means that estimates a user's preference tendency from the information acquired in the establishment information acquiring means and a processing level revising means that revises a level of the image processing based on information showing the user's preference tendency estimated in the preference tendency estimating means.

The structure described in Item 120 is the image recording apparatus described in either one of Items 114 - 119, wherein there is further included a preference judging information acquiring means that acquires preference judging information used for acquiring or estimating a user's preference from tag information added to the image signals indicating the photographed image.

The structure described in Item 121 is the image recording apparatus described in either one of Items 88 - 120, wherein there are further included an field angle estimating means that estimates an angle of field by which a main captured-subject is covered when an image is observed and a content changing means that changes contents of the image processing according to the angle of field estimated in the field angle estimating means.

The structure described in Item 122 is the image recording apparatus described in Item 121, wherein there is further included a content changing means that changes contents of the image processing depending on whether the angle of field estimated in the field angle estimating means can be covered by a reference field angle obtained with experience on the basis of tone and lightness or one of them.

The structure described in Item 123 is the image recording apparatus described in Item 121, wherein there is further included a contrast-increasing means that increases contrast more for the smaller angle of field, when the angle of field estimated in the field angle estimating means is smaller than the reference field angle.

The structure described in Item 124 is the image recording apparatus described in Item 121, wherein there is further included a means to increase contrast by 5% or more that increases contrast 5% or more when the angle of field estimated in the field angle estimating means is smaller than the reference field angle.

The structure described in Item 125 is the image recording apparatus described in Item 121, wherein there is further included a contrast-reduction means that reduces contrast more for the greater angle of field, when the angle of field estimated in the field angle estimating means is greater than the reference field angle.

The structure described in Item 126 is the image recording apparatus described in Item 121, wherein there is further included a means to decrease contrast by 5% or more that decreases contrast 5% or more when the angle of field estimated in the field angle estimating means is greater than the reference field angle.

The structure described in Item 127 is the image recording apparatus described in Item 121, wherein there is further included an enhancement processing means that conducts edge enhancement or high-frequency component enhancement processing more for the smaller angle of field, when the angle of field estimated in the field angle estimating means is smaller than the reference field angle.

The structure described in Item 128 is the image recording apparatus described in Item 121, wherein there is further included an inhibition processing means that conducts removal of granulated noise or medium frequency component inhibition processing more for the greater angle of field, when the angle of field estimated in the field angle estimating means is greater than the reference field angle.

The structure described in Item 129 is the image recording apparatus described in Item 121, wherein there is further included a chroma enhancement means that enhances chroma more for the smaller angle of field when the angle of field estimated in the field angle estimating means is smaller than the reference field angle.

The structure described in Item 130 is the image recording apparatus described in Item 121, wherein there is further included a chroma enhancement means that enhances chroma more for the greater angle of field when the angle of field estimated in the field angle estimating means is greater than the reference field angle.

The structure described in Item 131 is the image recording apparatus described in either one of Items 88 - 130, wherein the recording means is a device to print out.

The structure described in Item 132 is the image recording apparatus described in either one of Items 88 - 130, wherein the recording means is a device to print out on a silver halide photographic paper.

The structure described in Item 133 is the image recording apparatus described in either one of Items 88 - 130, wherein the recording means is a device to print out with an ink-jet method.

The structure described in Item 134 is the image recording apparatus described in either one of Items 88 - 130, wherein the recording means is a device to print out with an electro-photographic method.

The structure described in Item 135 is the image recording apparatus described in either one of Items 88 - 130, wherein the recording means is a device to print out with a sublimating method.

The structure described in Item 136 is the image recording apparatus described in either one of Items 88 - 130, wherein the recording means is a device to print out with a thermal method.

The structure described in Item 137 is the image recording apparatus described in either one of Items 88 - 130, wherein the recording means is a device to record signals in a recording medium.

The structure described in Item 138 is the structure described in Item 137, wherein the recording medium is at least one of CD-R, CD-RW, MD, a memory card, an IC card, a floppy disk and a optical magnetic disk.

The method described in Item 139 is that in the method described in any one of Items 1-43, the captured image data outputted from the image capturing device are scene-referred image data.

The recording medium described in Item 140 is that in the recording medium described in Item 44, the captured image data outputted from the image capturing device are scene-referred image data.

The structure described in Item 141 is that in the structure described in any one of Items 45-87, the captured image data outputted from the image capturing device are scene-referred image data.

The structure described in Item 142 is that in the structure described in any one of Items 88-138, the captured image data outputted from the image capturing device are scene-referred image data.

The method described in Item 143 is that in the method described in any one of Items 1-43, the captured image data outputted from the image capturing device are scene-referred raw data.

The recording medium described in Item 144 is that in the recording medium described in Item 44, the captured image data outputted from the image capturing device are scene-referred raw data.

The structure described in Item 145 is that in the structure described in any one of Items 45-87, the captured image data outputted from the image capturing device are scene-referred raw data.

The structure described in Item 146 is that in the structure described in any one of Items 88-138, the captured image data outputted from the image capturing device are scene-referred raw data.

The method described in Item 147 is that in the method described in any one of Items 1-43, the captured image data outputted from the image capturing device are visual image-referred data.

The recording medium described in Item 148 is that in the recording medium described in Item 44, the captured image data outputted from the image capturing device are visual image-referred data.

The structure described in Item 149 is that in the structure described in any one of Items 45-87, the captured image data outputted from the image capturing device are visual image-referred data.

The structure described in Item 150 is that in the structure described in any one of Items 88-138, the captured image data outputted from the image capturing device are visual image-referred data.

Now, terminology used in each Structure of the invention will be explained supplementarily.

"Generating" means that a program that operates in an image capturing device, an image processing apparatus and an image recording apparatus of the invention creates an electronic file newly. In the following, "preparing" is used to be synonymous with "generating".

"Visual image-referred data" are image data generated based on the image processing method of the invention, and they mean those used in the case of display on a display device such as CRT, a liquid crystal display and a plasma display and those used for generating hard copy images on an outputting medium such as a silver halide photographic paper, an ink jet paper and a thermal printing paper. The visual image-referred data have been subjected to optimization processing for obtaining images which are optimized for appreciation on the display device and on the outputting medium.

A medium on which the visual image-referred data are outputted includes a display device such as CRT, a liquid crystal display and a plasma display and a material on which a hard copy image is generated such as a silver halide photographic paper, an ink jet paper and a thermal printing paper.

"Image optimizing processing" is processing for obtaining optimum images on a display device such as CRT, a liquid crystal display and a plasma display and an outputting medium such as a silver halide photographic paper, an ink jet paper and a thermal printing paper, and for example, under the assumption to display on a CRT display monitor complying with sRGB standards, the processing is conducted so that optimum color reproduction may be obtained within a color gamut of the sRGB standards. Under the assumption of a silver halide photographic paper, the processing is conducted so that optimum color reproduction may be obtained within a color gamut of the silver halide photographic paper. In addition to compression of the color gamut, gradation compression from 16 bits to 8 bits, reduction of the number of output pixels and processing for coping with output characteristics (LUT) of an output device are included. It is natural that image processing such as noise prohibition, sharpening, color balance adjustment, chroma adjustment and dodging are further conducted.

The "image capturing device (photographing device)" is a device equipped with an image pickup element having a function of photoelectric conversion, and it includes the so-called digital camera and a scanner. As an example of the image pickup device, there are given an image pickup device of the CCD type and an image pickup device of the CMOS type. An output electric current of each of these image pickup elements is digitalized by an A/D converter. Contents of each color channel at this stage are of the signal intensity based on spectral sensitivity which is peculiar to the image pickup element.

There are considered the following three types for the type of the image capturing device that can be used for working of the invention. One of them is a type to generate scene-referred image data through photographing, the second one is a type to output scene-referred raw data which are used for generation of scene-referred image data and are dependant on image capturing device characteristics and to output reproduction auxiliary data for conducting correction processing for image capturing device characteristics, and the third one is a type to generate visual image-referred data.

The "scene-referred image data" are image data wherein signal intensities of each channel based on spectral sensitivity of at least an image pickup element itself have been mapped in a standard color space such as RIMM RGB and ERIMM RGB described in the conventional technology, and image processing to change data contents for improving effects of image appreciation such as gradation change, sharpness emphasizing and chroma emphasizing is omitted. Further, it is preferable that the scene reference data are those wherein photoelectric conversion characteristics (representing "optoelectronic conversion function" defined by ISO145 that can be referred, for example, to page 449 in "Fine imaging and digital photographs" edited by Publication Committee of The Society of Photographic Science and Technology of Japan and published by Corona Co.) of the image capturing device have been corrected.

The "scene-referred raw data" are raw signals outputted directly from the image capturing device that recorded information on a fidelity basis, and they mean data digitalized by an A/D converter or data wherein noise corrections such as process pattern noise correction and dark current noise correction are conducted on the aforementioned data. The scene-referred raw data are characterized in that image processing to change data contents for improving effects of image appreciation such as gradation change, sharpness emphasizing and chroma emphasizing and processing to map signal intensities of each color channel based on spectral sensitivity that is peculiar to the image pickup element in a standardized color space such as RIMM RGB and sRGB are omitted.

It is preferable that an amount of information of the scene-referred raw data (for example, density level) complies with capacity of the A/D converter and is equal to or more than an amount of information (for example, density level) that is required on visual image-referred data. For example, when the density level of visual image-referred data is 8 bits per 1 channel, the density level of 12 bits or more for scene-referred raw data is preferable, that of 14 bits or more is more preferable and that of 16 bits or more is still more preferable.

The "reproduction auxiliary data for conducting correction processing for image capturing device characteristics" mean data wherein correction processing for image capturing device characteristics defined in the previous item can be conducted by using only information described in data. At least information which makes it possible to map signal intensities of each color channel based on spectral sensitivity of the image pickup element itself in a standard color space such as RIMM RGB and ERIMM RGB, namely, a matrix coefficient to be used when converting spectral sensitivity characteristics peculiar to the image pickup element into a specific standard color space such as RIMM RGB is required to be described.

The "scene-referred image data" are sometimes image data prepared by the use of a film scanner for inputting frame image information recorded by an analog camera on a photographic sensitized material such as a color negative film, a color reversal film, a black and white negative film and a black and white reversal film, or by the use of a flat bet scanner for inputting image information reproduced on a color paper representing a silver halide photographic film, in addition to digital image data obtained by a digital camera representing an image capturing device.

As "captured-image data" to be used for the image processing method, the image processing apparatus and the image recording apparatus of the invention, the scene-referred image data obtained by using the image capturing device that generates the scene-referred image data as described in Structures 139 - 142, are preferable. However, from the viewpoint of reducing load for processing and power consumption in the image capturing device, the scene-referred raw data which are obtained by the use of the image capturing device of a type for outputting scene-referred raw data dependant on image capturing device characteristics and for outputting reproduction auxiliary data in the case of conducting image capturing device characteristic correction processing, used in generating the scene-referred image data as described in Structures 143 - 146, are preferable. Further, when using an image capturing device of a type for generating the visual image-referred data as described in Structures 147 - 150, there is needed processing to convert from visual image-referred data to scene-referred image data. To be concrete, it is necessary to correct at least one of gradation characteristics, color reproduction characteristics and frequency characteristics based on characteristics of each image capturing device, and to reproduce the state wherein there is no difference between image capturing devices.

The "image optimizing processing" is processing for obtaining optimum images on a display device such as CRT, a liquid crystal display and a plasma display and an outputting medium such as a silver halide photographic paper, an ink jet paper and a thermal printing paper, and for example, under the assumption to display on a CRT display monitor complying with sRGB standards, the processing is conducted so that optimum color reproduction may be obtained within a color gamut of the sRGB standards. Under the assumption of a silver halide photographic paper, the processing is conducted so that optimum color reproduction may be obtained within a color gamut of the silver halide photographic paper. In addition to compression of the color gamut, gradation compression from 16 bits to 8 bits, reduction of the number of output pixels and processing for coping with output characteristics (LUT) of an output device are included. It is natural that image processing such as noise prohibition, sharpening, color balance adjustment, chroma adjustment and dodging (local printing) are further conducted.

The "main captured-subject (main photographed-subject)" stated above is a subject which is looked to play a central role in a representation when a photographer establishes composition of photographed image, and it is a person, in particular, a face area in many cases. Even in the case of a landscape photograph including no person, it is a rare case that the composition is established aimlessly, and flowers, animals and still lives in the foreground are main captured-subjects in some cases, while, mountains, skies and clouds in the background are main captured-subjects in another case.

The "size of output image" mentioned above means an actual size of an entire exposed image area printed or displayed on a medium, and when printed on a sheet of A4 size, for example, an area of about 190 mm x 280 mm excluding a margin for edging is a size of output image.

The "size of a main captured-subject in output image" mentioned above means an actual size of a main captured-subject area printed or displayed on a medium. Even in the case of being printed on the sheet of the same A4 size, for example, the size is a 50 mm square to a 100 mm square in a close-up photograph of a person in many cases and the size is a 10 mm square to a 30 mm square in a group photo or souvenir photographing with a background of a building for a person in many cases. Even in the case where a size of output image is constant as stated above, a size of a main captured-subject in output image is dependent upon the composition intended by a photographer, and it varies in each image.

The invention is characterized in that the contents of image processing applied to image signals indicating a photographed image are established, based on the "size of output image" and "size of main captured-subject in output image", so that favorable impression may be made when images are observed on an output medium. An embodiment of the concrete change of contents of image processing will be explained in detail later.

In the aforesaid method for "obtaining a size of output image", a size of output image can be obtained easily from contents of instructions for printing when the embodiment of the invention is an image processing apparatus connected to an image recording apparatus or a printer, and a size of output image can be obtained by the embodiment of the invention when a user specifies a size of estimated output image, even when the embodiment of the invention is an image processing method or an image processing apparatus which is not connected directly to the printer and outputs image data to the file or to the communication means.

Further, even when a size of output image cannot be obtained, the invention can be executed by "estimating a size of output image". For example, the number of pixels of output image correlates strongly with a size on an output medium intended by a user. An image with about 10000 pixels is used for a thumbnail index, and a size of output image is estimated to be intended to be about several centimeters square, and an image with about 2000000 pixels is estimated to be intended for prints of L - 2L sizes. The simplest method to estimate a size of output image is attained by converting the number of pixels of an image into a size of output image, by assuming printing conditions (for example, 300 DPI) for general color images.

The method "to obtain a size of a main captured-subject in output image" is attained by accepting the specification when a command is given to the embodiment of the invention and by referring to added information (so-called tag information) attached to image signals indicating a photographed image. With respect to the method to attach this added information, the added information may be given as original information format or as independent information file of signals. However, as an embodiment that is more preferable, it is possible to use existing tag information stipulated in various all-purpose image formats represented by JPEG, TIFF and Exif, or to use an area which can be used freely such as a maker note or a user note.

A size of a main captured-subject is not always specified in an actual size on output image, and it is also possible to give information which can calculate "the rate occupied by a main captured-subject on an image" by the means similar to the foregoing. For example, when a size of a main captured-subject is given as the number of pixels on one side or on a radius, the rate occupied by the main captured-subject on an image can be calculated easily by comparing with the number of pixels for the entire image, and when it is multiplied by a size of output image obtained or estimated by the invention through the aforesaid method, a size of the main captured-subject on output image can be calculated easily.

Even in the case where a size of a main captured-subject is not specified directly, it is possible to execute the invention by "estimating a size of a main captured-subject in output image". Though there are given concretely a method to extract a flesh color portion from image signals and a method to extract a range wherein hue and lightness are constant, the method which is more preferable is one to "obtain information about photographing conditions and to estimate from the information a rate occupied by a main captured-subject. As a practical example of information about photographing conditions, there are given an area of a subject, a scene type for photographing, a subject distance and detection of a stroboscopic reflected light. Though these pieces of information may be given as an original information format and original information file and signals, the more preferable embodiment is to refer to existing tag information stipulated in various types of all-purpose image formats represented by JPEG, TIFF and Exif, or to use an area that can be used freely such as a maker note or a user note.

There will be explained a method to estimate a rate occupied by a main captured-subject based on information about photographing conditions, by giving examples.

With respect to the occasion where information of an area of a subject has been given, for example, if this information has been provided in a form wherein the number of pixels in an area can be calculated as in the number of pixels for the central coordinates and a radius of a circular area or for the central coordinates and the longitudinal and the lateral directions of a rectangular area, the rate occupied by a main captured-subject can be calculated easily in an image by comparing the number of pixels of the total image, and it is possible to calculate a size of the main captured-subject in output image easily, by multiplying the calculated rate by a size of the output image obtained or estimated through the aforesaid method in the invention. When information of an area of a subject is given with only one point of the central coordinates of the area, it is possible to confirm the number of pixels of the primary subject area by calculating average hue and average lightness of several pixels on the periphery of the specified coordinates and by searching pixel areas whose hue and lightness are included in a certain range (for example, a difference of hue angles is within $10°$ and a difference of lightness is within 10% of a dynamic range) from the average values in the periphery of the specified central coordinates.

Further, when information of a type of photographing scene is given, a main captured-subject is a face of a person in the case of photographing of a person or a portrait, and its diameter is estimated to be about 1/4 - 1/2 of a shorter side of an image. As a rough value, by using equally the number of pixels equivalent to an area of a circle with a diameter of about one third of the number of pixels for a shorter side of an image, the rate occupied by the main captured-subject can be estimated, and by searching the flesh color gamut of about 1/4 - 1/2 of a shorter side of an image from the image, estimating accuracy can be improved.

Further, when a photographing scene type is represented by a scene, a main captured-subject occupies about 10% of the image area in many cases. Further, when a photographing scene type is represented by a night view, an area whose lightness is higher when comparing with the total image can be estimated as a main captured-subject. When information of a subject distance is given, it is possible to estimate a rate occupied by a main captured-subject in an image, by assuming that a main captured-subject is a face of a person, and by calculating a size of a face in accordance with a subject distance based on lens characteristics of a general compact camera.

When information of stroboscopic reflected light is given, a rough subject distance can be estimated by information of presence and intensity of reflected light, and the rate occupied by the main captured-subject in the image can be estimated through the same method as in the foregoing. When plural pieces of photographing information are given, it is naturally possible to improve accuracy of estimation by combination of information and by judgment.

The invention is characterized to determine the contents of the image processing to be applied to image signals indicating a photographed image based on "a size of output image" and "a size of a main captured-subject in output image" obtained or estimated through the aforesaid method, so that more favorable impression may be given when an image is observed on an output medium. An actual embodiment of image processing will be explained as follows.

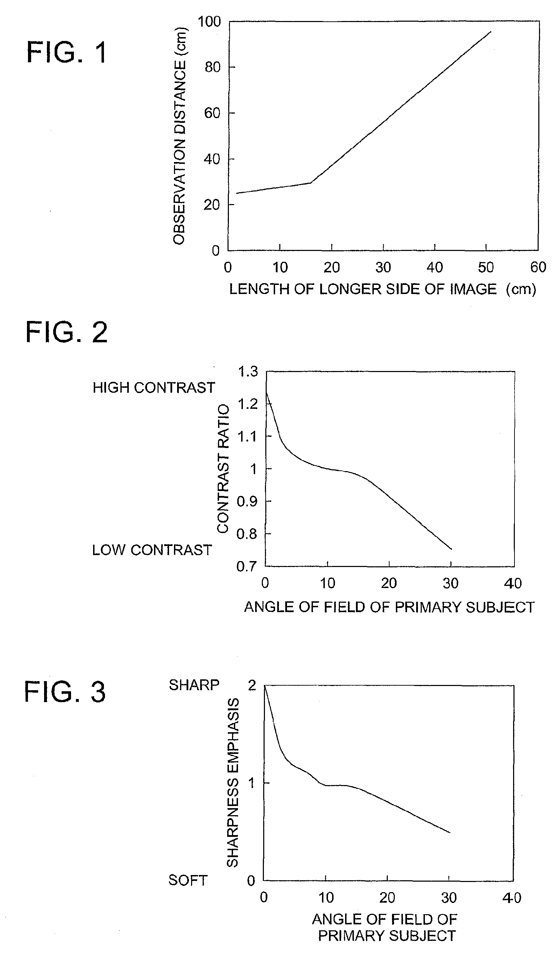

When a person appreciates photographed image displayed on a medium or on a print, its general distance for appreciation varies depending on "a size of output images". An observing distance for an image size corresponding to photographic sizes of L (86 mm x 128 mm) - 2L (128 mm x 172 mm) is about 30 cm, and when the image is greater, the observing distance is longer so that a visual field may cover the total image. In many cases, this distance is represented by a distance wherein a longer side of an image can be covered within about 30° of an angle of field. Even when an image is small, on the contrary, it does not happen that the observing distance is much shorter than 30 cm. This relationship is shown in Fig. 1. Incidentally, the exposed image mentioned here means the so-called photographic image photographed by the means such as a film camera and a digital camera. For example, when a picture frame illustration is written on an output medium, and photographed image are enchased within the illustration serving as a template, the observing distance is not controlled by a size of the picture frame illustration but is controlled by a size of inner photographed image, in general. Therefore, "a size of output image" in the invention means a size of photographed image for appreciation which are inside the template. When a plurality of photographed image each being different in terms of size are enchased in the same template, a size of output image is defined separately for the respective photographed image.

On the other hand, an impression given to an appreciator by an image depends on how the main captured-subject located at the aforesaid observation distance looks. It is generally said that resolution in the sense of sight of a person is high in a range of 10° (the reference angle of field) in terms of an angle of field, and in the case of an observing distance of 30 cm, for example, a range of a diameter of about 5 cm corresponds to a range of an angle of field 10°.

Here, the reference angle of field is obtained with the sense of experience based on hue (color) and/or lightness (for example, the reference can be made on page 52 "(C) displacement angle and eyesight from eyes" in the publication "SHINPEN-SHIKISAI-KAKAGU HANDBOOK SECOND VERSION" by "NIHON-SHIKISAI-GAKUHEN").

The angle of field is defined by the following expression;

Numeral 1

$$\phi = 2 \cdot \tan^{-1}\left(\frac{d}{r}\right)$$

wherein, θ represents an angle of field, d represents a radius of a main captured-subject and r represents an observation distance.

When a size of a main captured-subject on an image is smaller than a range of angle of field 10°, sharp pictures each having high contrast and a sharp contour are preferred. For example, if a face is a main captured-subject and its diameter is as small as 5 cm or less, a photograph with clearly-marked features is preferred. In particular, if a diameter of a face is about 1 cm - 2 cm as in a group photo, a picture with high contrast which makes it easy to discriminate is preferred. When the main captured-subject is greater than a range of an angle of field 10°, on the contrary, a picture with low contrast that gives soft impression is preferred. For example, if a face is a main captured-subject and its diameter is 10 cm, a partial skin of the face is covered by the range for an angle of field of 10°. Under this condition, if contrast is too high and sharpness is too strong, an impression of grainy skin and an impression that shadows of the eyes and the nose are too strong are given, and a sense of incompatibility is given to a change of chroma of a microscopic part. In this case, if the contrast is made to be low and sharpness and a chroma change are made to be moderate, a skin gives a smooth and young and fresh impression.

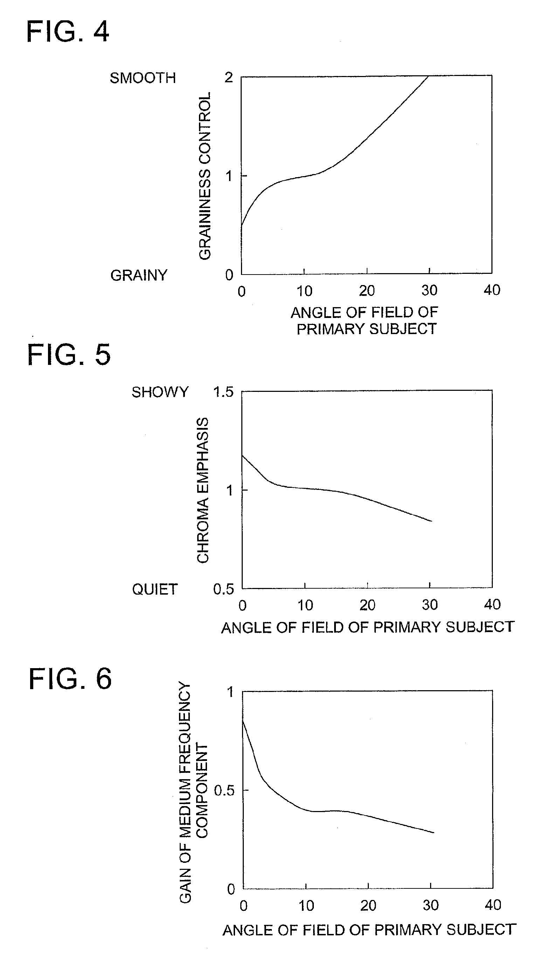

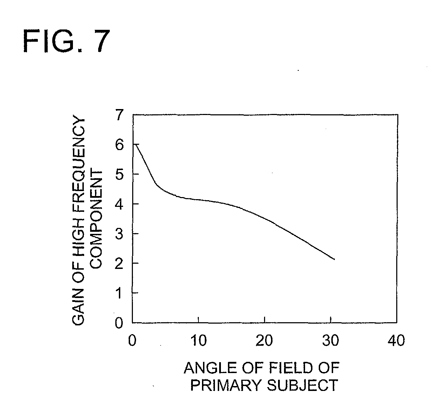

In the preferable embodiment of the method to determine the contents of image processing to be applied to image signals indicating a photographed image, on the basis of the rule of thumb, an observing distance is estimated from "a size of output image" and an angle of field for the total main captured-subject is estimated from the observing distance and "a size of a main captured-subject in output image" both based on the empirical rule, and establishment of contrast of images, a degree of enhancement of sharpness, a degree of control of granulated noise and a degree of enhancement of chroma are controlled in accordance with the angle of field for the total main captured-subject, resulting in that it is possible to make a favorable impression when an image is observed on an output medium. An example is shown in Figs. 2 - 5. When employing a technology to use control of medium frequency component represented by TOKKAI No. 2000-215307 and enhancement of high frequency component jointly, it is preferable to control the establishment of the control of medium frequency component and the enhancement of high frequency component, depending on the angle of field for the total main captured-subject. An example is shown in Figs. 6 and 7. Incidentally, with respect to a definition of the medium frequency component and high frequency component mentioned in this case, it is described in detail in the aforesaid specification.

Incidentally, in this case, image processing conditions were determined by calculating an observing distance and an angle of field for the total main captured-subject from "a size of output image" and "a size of a main captured-subject in output image", just for explanation. In the actual embodiment, however, it is not necessary to make the aforesaid calculation each time image signals indicating a photographed image are received, and it is preferable to determine the image processing conditions by referring to a look-up table on which image processing conditions corresponding to "a size of output image" and "a size of a main captured-subject in output image" are described or to a simple expression for approximate calculation.

Further, in the invention, it is preferable to acquire the tendency of image processing conducted when image signals indicating a photographed image are generated, and to correct the extent of the image processing based on the information of the tendency of image processing. To be concrete, for example, it is preferable to acquire an image processing tendency such as contrast processing, sharpness processing and chroma processing which are conducted when image signals indicating a photographed image are generated, and to correct the extent of the image processing based on the information. As a method for acquiring information concerning this image processing tendency, though information may be acquired as an original information format or as an independent information file and signals, the more preferable mode is to refer to existing tag information stipulated in various all-purpose image formats represented by JPEG, TIFF and Exif, or to use an area that can be used freely such as a maker note and a user note. If the contrast is already established to be high based on the aforesaid information in the course of photographing, for example, it is possible to put image characteristics of output image in an appropriate range by correcting the extent of image processing in the invention under consideration of overlapping with image processing in the course of photographing and of reciprocity, including controlling or abolishing contrast enhancement in the case of a main captured-subject on an image that is smaller than a range of angle of field 10°, or raising the extent of contrast reduction in the case of a main captured-subject on an image that is greater than a range of angle of field 10°.

Further, in the invention, it is preferable that information about the tendency of the user's taste is acquired together and the extent of the image processing is corrected based on that information. As a method to acquire information about the user's taste, it is possible to specify the tendency of taste such as hard, soft, showy, quiet and fidelity for input, when a user gives instructions to the embodiment of the invention, or to make the specified information for the tendency of taste to be included in an original information format or in an independent information file and signals. However, the more preferable mode is to record the tendency of taste on the existing tag information stipulated in various all-purpose image formats represented by JPEG, TIFF and Exif, or on an area that can be used freely such as a maker note and a user note.

Further, even when it is impossible to acquire information about the tendency of taste of a user, it is preferable to estimate the tendency of taste of a user and to correct the extent of the image processing based on the results of the estimation. As information used for estimating the tendency of taste of a user, there are given some pieces of information including those concerning, for example, a photographing equipment model, the number of pixels of photographing, an exposure mode and white balance setting. These pieces of information may be specified when a user gives instructions to the embodiment of the invention, or may be specified by describing the information on an original information format or on an independent information file and signals. However, the more preferable mode is to acquire the information by referring to the existing tag information stipulated in various all-purpose image formats represented by JPEG, TIFF and Exif, or to an area that can be used freely such as a maker note and a user note.

For example, when a photographing equipment is a high-grade machine such as an SLR digital camera, there is a high possibility that a skill of a photographer is high, and photographing conditions and establishment of photographing mode have been determined by considering the state to appreciate images printed or displayed on a medium, and a composition has been determined by considering a position and a size of a main captured-subject in an image. Therefore, it is preferred that the image processing conducted in each of an image processing method, an image processing apparatus and an image recording apparatus is made to be moderate. Even when a photographing equipment model is unknown, when the number of pixels for photographing is so many from the viewpoint of the market of the times, the photographing is judged to be conducted by the high-grade machine, and the estimation stated above can be applied.

Further, when an exposure mode and a white balance are established manually and photographing is conducted through an automatic blanket mode, it is sure that photographing conditions and a photographing mode are established by a photographer with a clear intension. It is therefore preferable that the image processing that is conducted in each of an image processing method, an image processing apparatus and an image recording apparatus is made to be moderate or is deterred completely.

As stated above, if the technology of the invention is used, it is possible to realize, with a simple and all-purpose way, an image processing method, an image processing apparatus and an image recording apparatus each of which gives an image that gives favorable impression when observing the image on the output medium, without conducting calculation with high load, only by acquiring or estimating simple and plain information such as "a size of output image" and "a size of a main captured-subject in output image". It is further possible to obtain a stable effect by acquiring the tendency of image processing in the course of photographing, or acquiring or estimating the tendency of user's taste. Further, by acquiring information needed by the invention from the so-called tag information added to image signals indicating a photographed image, or by estimating information needed by the invention from the tag information, it is possible to realize an image processing method, an image processing apparatus and an image recording apparatus which can be adapted to complicated environment where image signals indicating a photographed image generated by various types of photographing equipment are mingled and received through media and communication means.

Incidentally, "5%" described in Items 37, 39, 81, 83, 124 and 126 is a value obtained with the sense of experience. That is the fact that the effect by softening or hardening the contrast by the extent of 5% may be hardly observed was already confirmed.

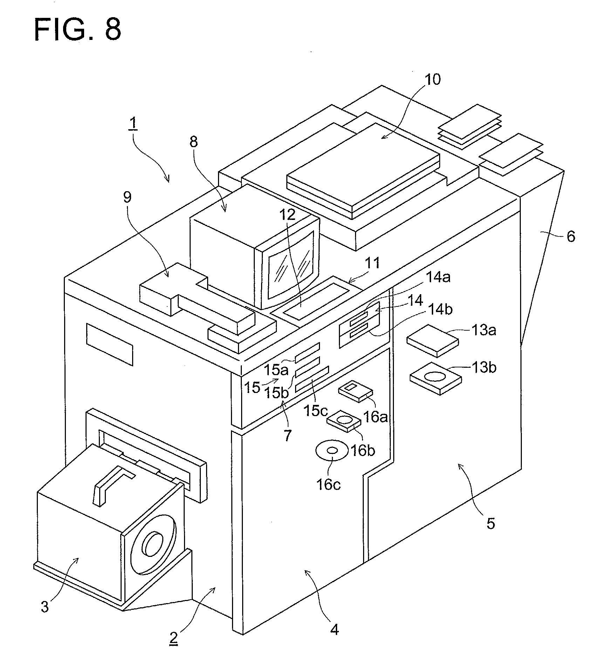

Specific embodiments of the image processing method of the invention, a recording medium on which a program for executing the image processing method is recorded, the image processing apparatus and of the image recording apparatus will be explained as follows, referring to Fig. 8 - Fig. 13.

Incidentally, image adjustment processing section 70b which will be explained below has therein an unillustrated first visual image-referred data generating means that generates visual image-referred data from scene-referred image data recorded by a photographing apparatus, an unillustrated second visual image-referred data generating means that generates scene-referred image data from scene-referred raw data recorded by an image pickup device and from reproduction data in the case of conducting processing for correcting image pickup device characteristics and generates visual image-referred data from scene-referred image data, and an unillustrated third visual image-referred data generating means that reproduces scene-referred image data from visual image-referred data recorded by the image pickup device and generates newly visual image-referred data. Further, there are realized functions which are owned respectively by

1:a processing content determining means that determines contents of processing, a size information obtaining means that obtains a size of an output image or a size of a primary subject, a first size estimating means that estimates a size of an output image, (a second) size estimating means that estimates a size of a primary subject, a rate information obtaining means that obtains a rate occupied by a primary subject in an image, a condition information obtaining means that obtains information concerning photographing conditions, a rate estimating means that estimates a rate occupied by a primary subject, a processing content changing means that changes contents of image processing, a processing trend obtaining means that obtains a trend of image processing, a correction means that corrects a degree of image processing, a preference trend obtaining means that obtains a trend of user's preference, a processing degree setting means that sets a degree of processing, a setting information obtaining means that obtains at least one information concerning white balance setting, a preference trend estimating means that estimates a trend of user's preference, a preference judgment information obtaining means that obtains preference judgment information from tag information, an angle of field estimating means that estimates an angle of field, a content changing means that changes image processing contents in accordance with the estimated angle of field, a contrast increasing means that increases contrast, a means to increase contrast by 5% or more that increases contrast by 5% or more, a contrast decreasing means that decreases contrast, a means to decrease contrast by 5% or more that decreases contrast by 5% or more, an emphasis processing means that conducts edge emphasis or high frequency component emphasis processing, a control processing means that conducts graininess noise removal or medium frequency component control processing and a chroma emphasis means that emphasizes chroma.

Fig. 8 is an appearance structural diagram of image recording apparatus 1 to which the invention is applied. As the image recording apparatus 1, there is illustrated an apparatus wherein a light-sensitive material is exposed to light and is developed and a print is made. However, it is also possible to employ an apparatus to make a print based on image information, without being limited to the aforementioned image recording apparatus 1, and for example, a print making apparatus of an ink jet method, an electrophotographic method, a thermosensitive method or a sublimation method may also be employed.

The image recording apparatus 1 is equipped with magazine loading section 3 on the left side of main body 2 of the apparatus, and inside the main body 2, there are provided exposure processing section 4 that exposes a light-sensitive material representing a recording medium to light and print making section 5 that makes a print, and a print thus made is ejected onto tray 6 that is provided on the right side of the main body 2. Further, inside the main body 2, there is arranged control section 7 on the upper position of the exposure processing section 4.

On the main body 2, there is arranged CRT 8 which has functions as a display means that displays a photographed image to be printed. On the left side of the CRT 8, there is arranged film scanner 9 representing a transmission-type document reading device, and on the right side of the CRT 8, there is arranged reflection-type document inputting device 10.

A document to be read by the film scanner 9 or by the reflection-type document inputting device 10 is a photographic light-sensitive material which is represented by a color negative film, a color reversal film, a black and white negative film and a black and white reversal film, on which frame image information photographed by an analog camera is recorded. A film scanner of the film scanner section 9 can convert into digital information to make frame image information. When the photographic light-sensitive material is a color photographic paper, a flat bed scanner of the reflection-type document inputting device 10 can make frame image information.

Further, image reading section 14 is provided at the position where control section 7 of the main body 2 is arranged. The image reading section 14 is provided with adaptor 14a for PC card and with adaptor 14b for FD (floppy (registered trade mark) disk, so that PC card 13a and FD 13b may be inserted respectively. The PC card 13a has therein a memory in which a plurality pieces of frame image information obtained by digital camera Q2 through photographing are stored. In the FD 13b, a plurality pieces of frame image information obtained by digital camera Q2 through photographing, for example, are stored.

Operation section 11 is arranged in front of CRT 8 on the top surface of the main body 2, and the operation section 11 is provided with information inputting means 12 which is composed of, for example, a touch panel.

As a recording medium having frame image information relating to the invention other than those mentioned above, there are given a multi-media card, Memory Stick (registered trade mark), MD data and CD-ROM.

Incidentally, though the operation section 11, CRT 8, the film scanner section 9, the reflection-type document, inputting device 10 and the image reading section 14 are of the construction to be provided solidly with the main body 2, any one or more of them may be provided separately.

Further, image writing section 15 is provided at the position where control section 7 of the main body 2 is arranged. The image writing section 15 is provided with adaptor 15a for FD, adaptor 15b for MO and adaptor 15c for the optical disk, so that FD 16a, MO16b and optical disk 16c may be inserted respectively, and various types of information may be written in these media.

Further, the control section 7 is provided with an unillustrated communication means, and thereby, the image recording apparatus 1 can function as the so-called network printer apparatus that receives directly image signals indicating photographed images and print orders from another computer in the same facility or from the remote computer connected to the Internet.

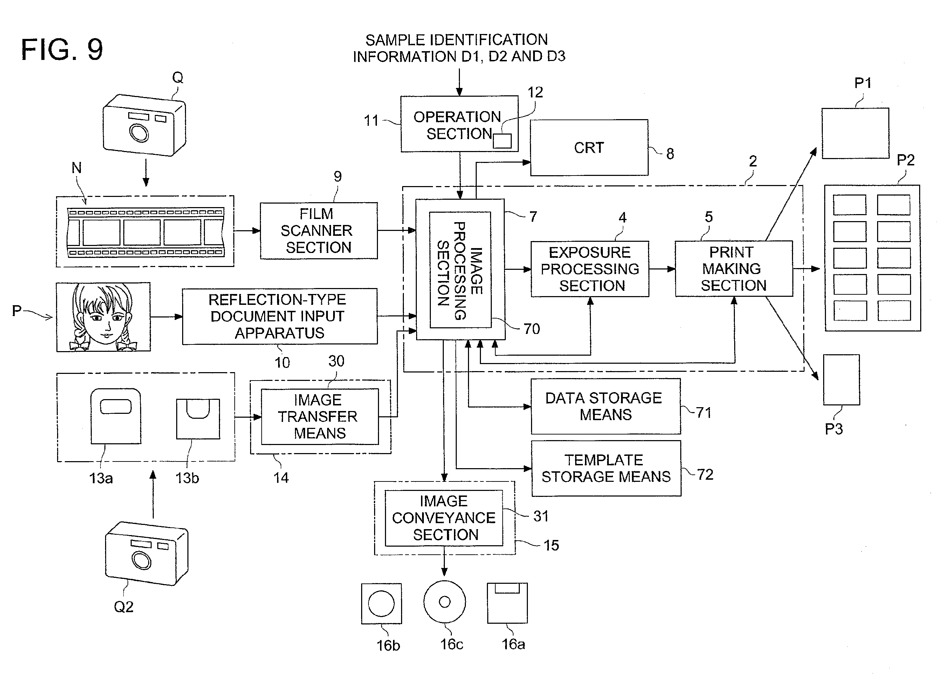

Next, the internal structure of the image recording apparatus 1 will be explained. Fig. 9 is a block diagram showing the internal structure of the image recording apparatus 1 to which the invention is applied.

The control section 7 reads document information and displays on CRT 8 through the film scanner section 9 and the reflection-type document inputting device 10, in accordance with command information from information inputting means 12.

Data accumulating means 71 stores image information and order information corresponding to the image information (information about how many prints to be made from image of which frame, and information about the print size), and accumulate them in succession. The film scanner section 9 reads frame image data coming from developed negative film N photographed by analog camera Q1, and reflection-type document inputting device 10 reads frame image data of print P obtained by printing frame image on a photographic paper for development processing.

Template storage means 72 stores sample image data (data showing background images and illustration images) by relating them to sample identifying information D1, D2 and D3 and stores at least one of data of template that establishes a compound area with the sample image data. In this case, when a prescribed template is selected from a plurality of templates stored in template storage means 72 in advance by the operation of an operator (the operation of the operator is based on the instruction of a client), the control section 7 compounds frame image information and the selected template, and then, when sample identifying information D1, D2 and D3 are specified by the operation of the operator (the operation of the operator is based on the instruction of a client), the control section 7 selects sample image data based on the specified sample identifying information D1, D2 and D3 and compounds the selected sample image data and the image data ordered by a client and/or character data, resulting in that a print based on the sample image data desired by a client is made. This composition made by the template is conducted by a chroma key method which is widely known.

Incidentally, the number of sample identifying information is not limited to three types of sample identifying information D1, D2 and D3, and it may either be greater or be smaller than three types.

Further, the control section 7 has image processing section 70 which will be described later, and the image processing section 70 conducts image processing on image information to form image information for exposure to transmit to exposure processing section 4. Then, the control section 7 exposes a light-sensitive material to light in the exposure processing section 4, and sends the light-sensitive material to print making section 5 wherein the light-sensitive material is subjected to development processing and is dried to make print P1, P2 and P3. In this case, print P1 is a print in a service size, a HDTV size or a panoramic size, while, print P2 is a print in an A4 size and P3 is a print in a card size.

Incidentally, print sizes are not limited to those for prints P1, P2 and P3, and other pint sizes are acceptable.

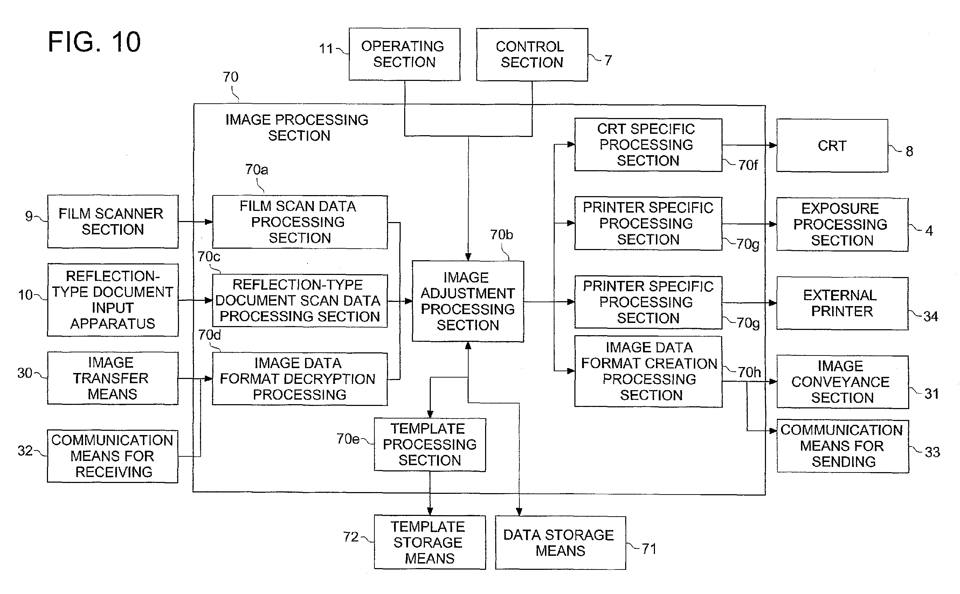

It is further possible for the image processing section 70 to receive directly image signals representing photographed images and work order such as printing from another computer in the same facility or from a remote computer connected to the Internet, by the use of communication means 32 for receiving (see Fig. 10), and thereby to conduct image processing through remote control or to make prints.

In addition, it is also possible for the image processing section 70 to transmit image signals after image processing and accompanying order information to another computer in the same facility or to remote computer connected to Internet, by using communication means 33 for transmission (see Fig. 10).

Image reading section 14 has functions to read frame image information photographed by digital camera Q2 and stored in PC card 13a or FD 13b and thereby to transmit the information. Namely, the image reading section 14 is equipped with adaptor 14a for PC card or adaptor 14b for FD as image transfer means 30, and reads frame image information recorded on PC card 13a loaded on adaptor 14a for PC card or recorded on Floppy (registered trade mark) disk 13b loaded on adaptor 14b for FD, to transfer to the control section 7. In this case, the adaptor 14a for PC card is represented by, for example, PC card reader and PC card slot.

Incidentally, though sample identifying information D1, D2 and D3 which specify print samples can be inputted from operation section 11, it is also possible to read the sample identifying information D1, D2 and D3 recorded on the sample of the print or on the order sheet, by the use of a reading means such as OCR. Or, an operator may input sample identifying information D1, D2 and D3 through a key board.

As stated above, sample image data are recorded corresponding to sample identifying information D1 that specifies the print sample, then, sample identifying information D1 that specifies the print sample is inputted, and sample image data are selected based on the sample identifying information D1 to be inputted, then, the sample image data thus selected and image data based on the order and/or character data are compounded, and a print based on the specified sample is made. Thereby, a user can place an order of the print by feeling various life-sized samples in its hands, thus, various demands of clients in a broad range of classes can be satisfied.

First sample identifying information D2 that specifies a first sample and image data of the first sample are stored, And second sample identifying information D3 that specifies a second sample and image data of the second sample are stored, then, sample image data selected based on the specified first and second sample identifying information D2 and D3 and image data based on the order and/or character data are compounded, and a print based on sample image data by the specification is made, thus, various types of images can be compounded, and it is possible to make prints that meet various demands by clients in broader range of classes.

Image writing section 15 is provided with FD adaptor 15a representing image conveyance section 31, MO adaptor 15b and optical disk adaptor 15c, and image information is recorded on FD 16a, MO 16b and optical disk 16c which are loaded respectively in these FD adaptor 15a, MO adaptor 15b and optical disk adaptor 15c.

As stated above, the image recording apparatus 1 has therein an image inputting means that takes in image information obtained through matrix metering for images of various digital media and for image documents, an image processing means that conducts processing on image information of an input image taken in by the image inputting means so that images giving preferable impression may be given when observing images on an output medium by obtaining or estimating information such as "a size of an output image" and "a size of a primary subject in output images", an image outputting means that displays processed images, or outputs prints for processed images, or writes processed images in an image recording medium, and a transmission means that transmits, through communication lines, an image signal and its accompanying order information to another computer in the same facility or to a remote computer connected to the Internet.

The image inputting means is composed of image reading section 14 that takes in image information recorded on various digital media such as PC card 13a and FD 13b, film scanner section 9 that takes in image information obtained through matrix metering of image documents, reflection-type document inputting device 10 and of communication means for receiving 32 (see Fig. 10), the image processing means that conducts processing (on image information of an input image taken in by the image inputting means) so that images giving preferable impression may be given when observing images on an output medium by obtaining or estimating information such as a size of an output image and a size of a primary subject in output images is provided with image processing section 70, and the image outputting means is composed of CRT8 that displays images, exposure processing section 4 and print making section 5 which output prints, image writing section 15 that writes in an image recording medium and of communication means for transmission 33 (see Fig. 10).

Fig. 10 is a diagram showing the schematic structure of image processing section 70. Image signals inputted from film scanner section 9 are subjected, in film scan data processing section 70a, to calibration operation that is peculiar to the film scanner section 9, negative-positive reversing in the case of a negative document, elimination of dust and scratches, gray balance adjustment, contrast adjustment, graininess noise removal and sharpness emphasizing, and are sent to image adjustment processing section 70b. In addition to that, film sizes, film types of negative or positive, information about a primary subject recorded on a film optically or magnetically, and information concerning photographing conditions (for example, contents of described information of APS) are sent to the image adjustment processing section 70b.

Image signals inputted from reflection-type document inputting device 10 are subjected, in reflection-type document scan data processing section 70c, to calibration operation that is peculiar to the reflection-type document inputting device 10, negative-positive reversing in the case of a negative document, elimination of dust and scratches, gray balance adjustment, contrast adjustment, noise removal and sharpness emphasizing, and are sent to image adjustment processing section 70b.

Image signals inputted from image transfer means 30 and from communication means for receiving 32 are subjected to restoration of compression symbols and conversion of indication methods for color signals in case of need in accordance with data form of the image signals, in image data form decryption processing section 70d, and are converted into the data form suitable for operation in the image processing section 70 to be sent to the image adjustment processing section 70b.

Further, information about a primary subject obtained from header information of image signals and from tag information, and information about photographing conditions are also sent to the image adjustment processing section 70b.

In addition to the foregoing, information about a primary subject coming from the film scanner section 9, reflection-type document inputting device 10, image transfer means 30 and from communication means for receiving 32, and information about photographing conditions can also be sent from operation section 11 to the image adjustment processing section 70b.

Though the specification about a size of the output image is inputted from the operation section 11, when there exist the specification about a size of the output image transmitted to the communication means for receiving 32 and the specification about a size of the output image embedded in header information of image signals obtained by image transfer means 30 and in tag information in addition to the foregoing, image data form decryption processing section 70d detects the information and transfers to the image adjustment processing section 70b.

When template processing is needed, the image adjustment processing section 70b transfers image signals to template processing section 70e, and receives the image signals after the template processing again. Further, based on the command from operation section 11 or control section 7, the image adjustment processing section 70b conducts image processing, in a method described later, so that images giving preferable impression may be given when observing images on an output medium, for image signals received from film scanner section 9, reflection-type document inputting device 10, image transfer means 30, communication means for receiving 32 and template processing section 70e, and transmits image signals to processing section peculiar to CRT 70f, processing section peculiar to printer 70g, image data form making processing section 70h and data accumulating means 71.

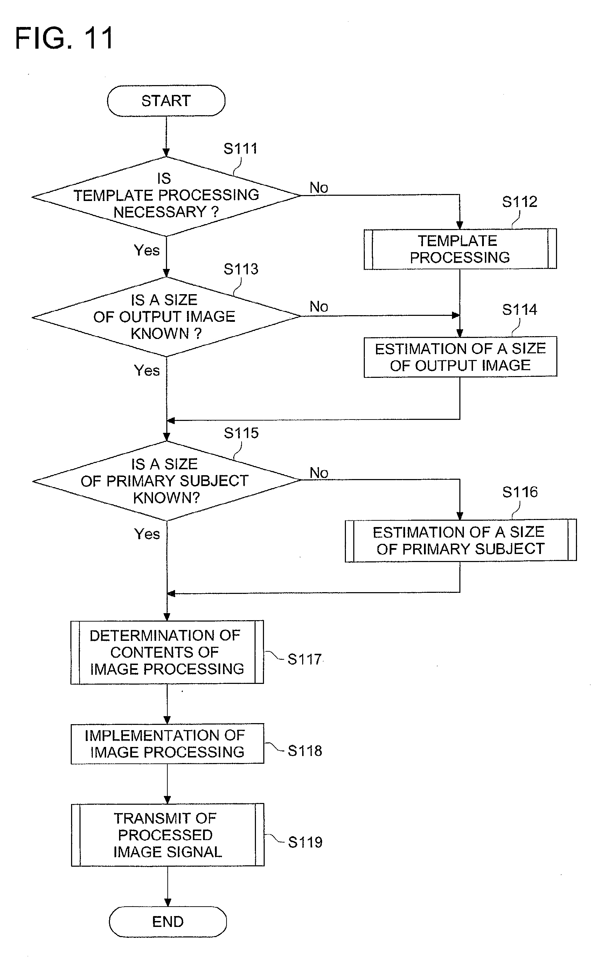

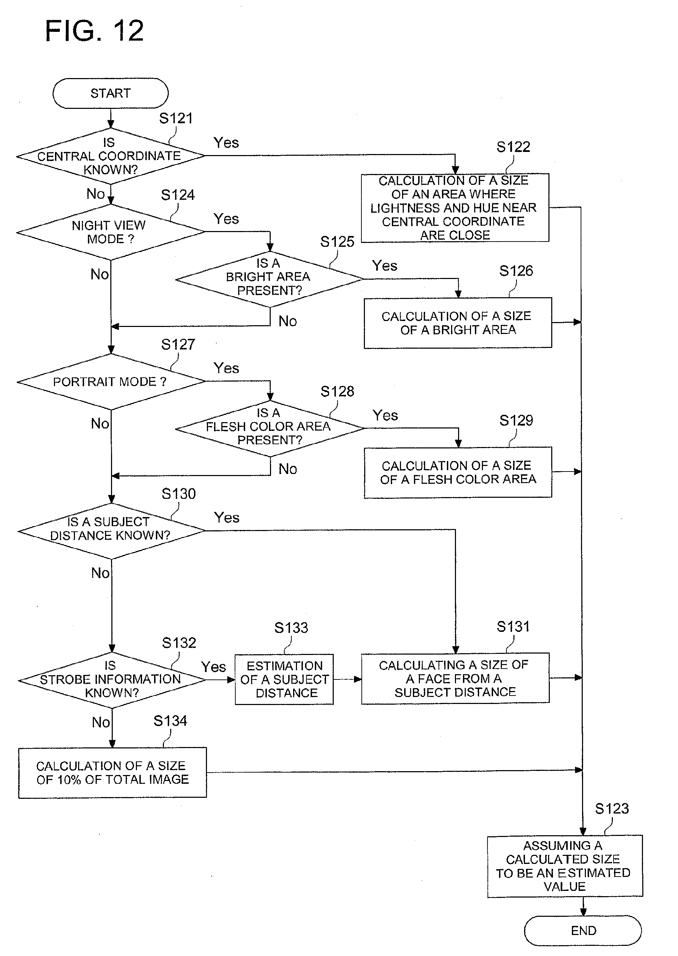

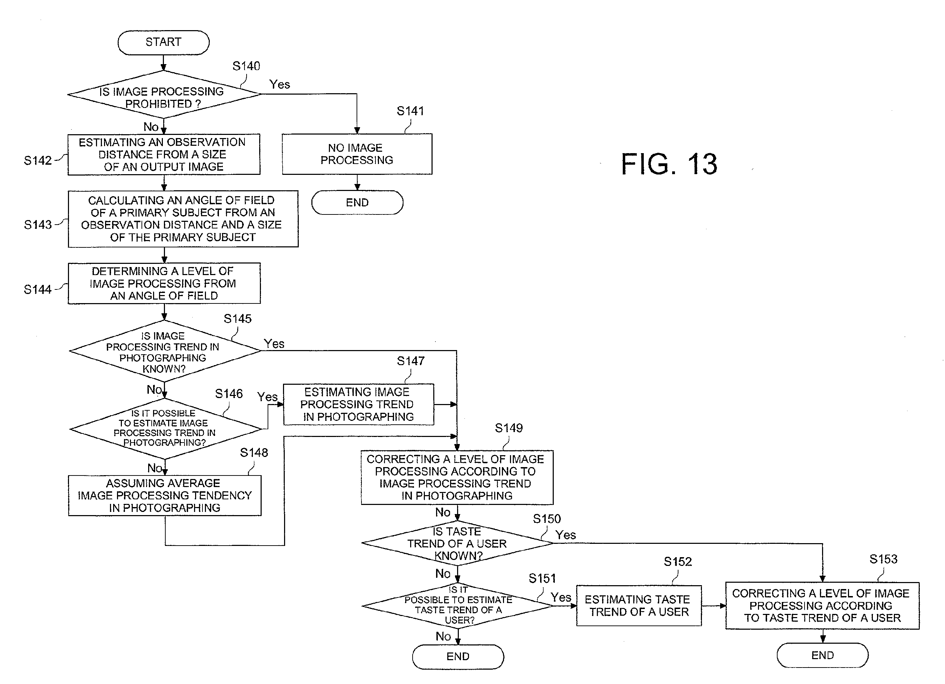

The image adjustment processing section 70b conducts image adjustment processing shown in Fig. 11, processing to estimate a size of a primary subject in a photographed image shown in Fig. 12 and processing to determine contents of image processing shown in Fig. 13. The image adjustment processing section 70b conducts the aforementioned various processing based on an image adjustment processing program (contents of the flow chart shown in Fig. 11) to be housed in memory 70i in image processing section 70 or in recording medium 701i provided detachably in advance, a program for estimating a size of a primary subject (contents of the flow chart shown in Fig. 12) and on a program for determining contents of image processing (contents of the flow chart shown in Fig. 13).

The processing section peculiar to CRT 70f conducts processing such as a change in the number of pixels or color matching, as occasion demands, for the image signals received from image adjustment processing section 70b, and transmits information that requires indication such as control information and compounded signals for display.

The processing section peculiar to printer 70g conducts calibration processing that is peculiar to a printer, color matching, or a change in the number of pixels, as occasion demands, and transmits image signals to exposure processing section 4. When connecting outer printer 34 such as a larger-sized ink jet printer to image recording apparatus 1, the processing section peculiar to printer 70g is provided on each outer printer 34 so that appropriate calibration processing that is peculiar to a printer, color matching and a change in the number of pixels may be conducted.

The image data form making processing section 70h conducts conversion to various general purpose image formats represented by JPEG, TIFF and Exif for image signals received from image adjustment processing section 70b, and transfers image signals to image conveyance section 31 and communication means for transmission 33.

The aforementioned division including film scan data processing section 70a, reflection-type document scan data processing section 70c, image data form decryption processing section 70d, image adjustment processing section 70b, image adjustment processing section 70b, to processing section peculiar to CRT 70f, processing section peculiar to printer 70g and image data form making processing section 70h is a division provided for easy understanding of functions of the image processing section 70 in the present embodiment, and it does not always need to be realized as a device that is independent physically, but it can be realized as a division of, for example, a type of software processing in a single CPU.

Next, operations of image recording apparatus 1 will be explained as follows, referring to Fig. 11, Fig. 12 and Fig. 13. Fig. 11 is a flow chart illustrating image adjustment processing by image adjustment processing section 70b.

First, image adjustment processing section 70b judges the presence or otherwise of necessity of template processing (step S111), and when the template processing is needed (step S111; Yes), the image adjustment processing section 70b entrusts processing to template processing section 70e (step S112) and receives image signals after processing to move to step S114 which will be explained later.

When the template processing is not needed in step S111 (step S111; No), the image adjustment processing section 70b judges whether a size of the output image has already been obtained or not (step S113), and when a size of the output image is unknown (step S113; No), or after the processing of step S112, the image adjustment processing section 70b estimates a size of the output image (step S114).

In step S114, image adjustment processing section 70b assumes general printing conditions for a color image (for example, 300 DPI), and estimates a size of the output image by converting the number of pixels of the image. When the template processing in step S112 is conducted, the image adjustment processing section 70b checks surely because there is a possibility that the total image indicated by the inputted image signals is included in a part of the output image, and converts a size of the output image into a size of the image area on the output image where the inputted image signals actually appear.

When a size of the output image is known at a stage of step S113 (step S113; Yes) or after the processing at step S114, the image adjustment processing section 70b judges whether a size of the primary subject in the output image has already been obtained or not (step S115), and when the size is unknown (step S115; No), processing to estimate a size of the primary subject in the output image which will be described later is conducted (step S116).

When a size of the primary subject in the output image is known at a stage of step S115 (step S115; Yes) or after the processing at step S116, the image adjustment processing section 70b determines contents of image processing by the method that is described later based on a size of the output image and on a size of the primary subject in the output image (step S117), and then, applies the determined image processing contents to the inputted image signals (step S118). In this case, with respect to the image signals which have been subjected to template processing in step S112, the image adjustment processing section 70b makes only the portion corresponding to the image signal indicating the inputted photographed images among image signals to be the target for image processing, and then, sends the image-processed image signals to the outside.

Next, the processing to estimate a size of the primary subject in step S116 shown in Fig. 11 will be explained in detail. Fig. 12 is a flow chart illustrating the processing to estimate a size of the primary subject.

First, the image adjustment processing section 70b judges whether the central coordinate is obtained or not (step S121), and when it is obtained (step S121; Yes), the image adjustment processing section 70b calculates average hue and average lightness of several pixels in the prescribed periphery of the coordinates (step S122), and estimates a size of the pixel area where the hue and lightness on the periphery of the specified central coordinates are within a certain range (for example, a difference of hue angle is within $10°$, and a difference of lightness is within 10% of a dynamic range) from the mean value (step S123).

When the central coordinate of a primary subject is not obtained at step S121 (step S121; No), the image adjustment processing section 70b judges whether a mode is a night view mode or not (step S124).

When a mode is a night view mode at a stage of step S124 (step S124; Yes), the image adjustment processing section 70b judges whether an area that is partially brighter is present or not (step S124), and when the area that is partially brighter is present (step S124; Yes), a size of that area is calculated (step S126). When a plurality of brighter areas are present in this case, a size of the greatest area or a size of the area closest to the image center is employed.

When a brighter area does not exist at a stage of step S125 (step S125; No) or when a mode is not a night view mode at step S124 (step S124; No), the image adjustment processing section 70b judges whether a mode is a portrait mode or not (step S127).

When a mode is a portrait mode at a stage of step S127 (step S127; Yes), the image adjustment processing section 70b judges whether a flesh color gamut in a moderate size (for example, a diameter is 1/5 or more of a shorter side length of a pixel) is further present at a relatively central portion of the image or not (step S128), and when the flesh color gamut is present (step S128; Yes), a size of the flesh color gamut is calculated (step S129).

When the flesh color gamut is not present at a stage of step S128 (step S128; No) or when a mode is not a portrait mode at step S127 (step S127; No), the image adjustment processing section 70b judges whether a subject distance is obtained or not (step S130), and when the subject distance is known (step S130; Yes), a size of a face corresponding to lens characteristics and a subject distance of an ordinary compact camera is calculated (step S131) under the assumption that a primary subject is a human face.

When the subject distance is unknown at step S130 (step S130; No), the image adjustment processing section 70b judges whether information about electronic flash is obtained or not (step S132), and when the information about electronic flash is known (step S132; Yes), a subject distance is estimated from return detection and a guide number (step S133) and a size of a face corresponding to the subject distance is calculated at step S131.

When the information about electronic flash is not obtained at step S132 (at step S132; No), the image adjustment processing section 70b calculates 10% of a size of the total image (step S134).

The image adjustment processing section 70b employs a value calculated in either one of steps including S122, S126, S129, S131 and S134 (step S123).

Incidentally, the embodiment given here is just an example, and a judgment method of the invention is not limited to the aforementioned judgment methods. Judging from the trend of characteristics of inputted image signals in the surroundings where an apparatus of the invention is used, it is preferable to try estimations in the order wherein the method having the highest precision of estimation comes first.

Next, the determination of contents of image processing in step S117 shown in Fig. 11 will be explained in detail. Fig. 13 is a flow chart illustrating how contents of image processing are determined.

There is a possibility that image signals which have already been processed based on consideration to give preferable impression when the image is observed on an output medium and/or image signals for which the image processing is to be prohibited in outputting based on specific intention are mingled in image signals representing photographed images. For the image signals of this kind, it is preferable that information to the effect that image processing is prohibited in the case of outputting is recorded previously on header information or tag information in various general-purpose image formats represented by JPEG, TIFF and Exif, or prohibition of image processing is instructed by an operator through operation section 11.

Therefore, the image adjustment processing section 70b judges whether image processing is prohibited or not, by referring to instructions from the header information, tag information and operation section 11, at the beginning of determination of image processing contents (step S140). When the image processing is prohibited (step S140; Yes), the image adjustment processing section 70b determines the contents of image processing to be "No image processing" so that no image processing may be conducted (step S141).

When the image processing is not prohibited at step S140 (step S140; No), the image adjustment processing section 70b calculates (estimates) an observation distance from a size of an output image and from relationship shown in Fig. 1 (step S142).

Next, the image adjustment processing section 70b calculates an angle of field of a primary subject in the case of observation by using, for example, the following expression, based on the aforesaid observation distance and on a size of the primary subject in the output image (step S143). In this case, θ represents an angle of field, d represents a radius of a primary subject and r represents an observation distance.

(Numeral 2)

$$\theta = 2 \cdot \tan^{-1}\left(\frac{d}{r}\right)$$

Next, the image adjustment processing section 70b determines each level for image processing such as contrast setting, a degree of emphasizing sharpness, a degree of controlling graininess noise and a degree of emphasizing chroma from relationship shown in Figs. 2 - 5, based on the angle of field calculated at step S143 (step S144).

Next, the image adjustment processing section 70b checks whether information about a trend of image processing in the course of photographing is obtained or not (step S145), and when the information is not obtained (step S145; No), the image adjustment processing section 70b checks whether information that can be used for estimating the image processing trend in the course of photographing is obtained or not (step S146). Information capable of being used for estimating an image processing trend in the course of photographing includes types of digital cameras used for photographing and names of makers for them, and it is possible to estimate the image processing trend in the course of photographing by referring to the table data in which the image processing trend for each type and maker is recorded beforehand.

When information capable of being used for estimating an image processing trend in the course of photographing is not obtained at a stage of step S146 (step S146; No), the image adjustment processing section 70b assumes that average image processing trend in each type and maker of the camera has been conducted in the course of photographing (step S148), and advances to step S149.

When the image processing trend in the course of photographing is known at a stage of step S145 (step S145; Yes), the image processing trend in the course of photographing can be estimated at a stage of step S146, and when the image processing trend is estimated (step S146; Yes, step S147), or after step S148, the image adjustment processing section 70b corrects contents of image processing based on the trend of image processing in the course of photographing (step S149).

For example, when the contrast is already set to be high in the course of photographing, it is possible to put image characteristics of output images in a moderate range by correcting the degree of image processing in the invention in the form where overlapping with image processing in photographing or reciprocity are considered, such as controlling or discontinuing contrast emphasis in the case where a size of a primary subject on the image is smaller than a range of an angle of field of about 10° and such as enhancing the degree of lowering contrast in the case where a size of the primary subject on the image is greater than a range of an angle of field of about 10°. Incidentally, when image signals indicating photographed images are generated by a film scanner or a flat-bed scanner (both are not shown), it is preferable to conduct the same correction as the foregoing by obtaining or estimating information concerning the image processing trend in the course of generating scan images.

After step S149, the image adjustment processing section 70b judges whether information about a preference trend of a user is obtained or not (step S150), and when the information about a preference trend of a user is obtained (step S150; Yes), a level of the image processing is corrected depending on the obtained preference trend of a user.

When the information about a preference trend of a user is not obtained at a stage of step S150 (step S150; No), the image adjustment processing section 70b judges whether information capable of being used for estimating the preference trend of a user is obtained or not (step S151).

When the information capable of being used for estimating the preference trend of a user is obtained at a stage of step S151 (step S151; Yes), the image adjustment processing section 70b estimates the preference trend of a user based on the aforesaid information (step S152).

When the preference trend of a user is obtained and is known (step S150; Yes) or the preference trend of a user is estimated (step S152), the image adjustment processing section 70b corrects the contents of image processing based on the preference trend of a user thus obtained or estimated (step S153). The contents of image processing to be executed based on a size of the output images and on a size of a primary subject in the output image are settled by the procedures stated above.

Incidentally, the determining procedure for contents of image processing shown in Fig. 13 is an example, and the invention is not limited to the aforesaid steps S140 - S153.

The description in the present embodiment disclosed above show concrete examples of an image processing method of the invention, a recording medium on which a program for executing the image processing method, an image processing apparatus and an image recording apparatus, to which, however, the invention is not limited. Detailed structures and detailed operations of image recording apparatus 1 of the present embodiment may be modified freely within a scope that does not depart from the spirit of the invention.

When the technology of the invention is employed, it is possible to realize an image processing method to offer an image that gives preferable impression when the image is observed on an output medium, an image processing apparatus and an image recording apparatus, by obtaining or estimating simple and plain information such as a size of an output image and a size of a primary subject in the output image. It is further possible to obtain stable effect by obtaining the image processing trend in the course of photographing and by estimating or estimating the preference trend of a user. Further, by obtaining information required by the invention from the so-called tag information added to image signals representing photographed images, or by estimating information required by the invention from the tag information, the image processing method, the image processing apparatus and the image recording apparatus which can be adapted to complicated environment where image signals representing photographed images generated by various image pickup devices are mingled and received through media and communication means, can be realized.

**Claims**

1.  A method of applying an image processing onto two dimensionally-arranged image data representing a captured image including a main captured-subj ect and producing image signals to reproduce the captured image visually with one of various reproduction sizes on one of various kinds of recording media, comprising:

    a reproduction size determining step of determining a reproduction size of the captured image to be reproduced visually on a recording medium;
    a subject size determining step of determining a size of the main captured-subj ect on the determined reproduction size of the captured image;
    an image processing content determining step of determining a content of the image processing on the basis of the determined reproduction size of the captured image and the determined size of the main captured-subject; and
    a processing step of applying the image processing with the determined content onto the two dimensionally-arranged image data and producing image signals to reproduce the captured image visually with the determined reproduction size on the recording medium.

2.  The method of claim 1, wherein the image processing content determining step determines the content of the image processing based on an angle of field to represent the size of the main captured-subject in a visual image reproduced on the recording medium on a basis of a viewing position when viewing the visual image.

3.  The method of claim 1 or 2, wherein the subject size determining step estimates the size of the main captured-subject on a basis of the determined reproduction size of the captured image and determines the size of the main captured-subject.

4.  The method of claim 1, 2 or 3, wherein the subject size determining step obtains an occupying ratio of the main captured-subject on the captured image and determines the size of the main captured-subject on the basis of the obtained occupying ratio.

5.  The method of claim 4, wherein the two dimensionally-arranged image data are provided with additional data including size information and the subject size determining step obtains the occupying ratio from the size information of the additional data.

6.  A method according to any one of the preceding claims, wherein the two dimensionally-arranged image data are provided with additional data including photographing information and the subject size determining step estimates an occupying ratio of the main captured-subject on the captured image from the photographing information of the additional data and determines the size of the main captured-subject on the basis of the estimated occupying ratio.

7.  The method of claim 6, wherein the photographing information includes at least one of a subject area, a type of a photographed scene, a subject distance and a detection of reflected strobe light.

8.  The method of claim 6 or 7, wherein the subject size determining step estimates an occupying ratio of the main captured-subject on the captured image from the two dimensionally-arranged image data and determines the size of the main captured-subject on the basis of the estimated occupying ratio.

9.  A method according to any one of the preceding claims, further comprising:

    a processing tendency obtaining step of obtaining a tendency of the image processing applied when the image signals representing the captured image are produced; and
    a correcting step of correcting an extent of the image processing on the basis of the tendency of the image processing obtained by the processing tendency obtaining step.

10. The method of claim 9, wherein the tendency of the image processing obtained by the processing tendency obtaining step includes at least one of a contrast processing, a sharpness processing, a granularity processing, and a chroma processing which is applied when the image signals representing the captured image are produced.

11. The method of claim 10, wherein the correcting step corrects the extent of the image processing with the consideration for duplication or reciprocity for the image processing applied when the image signals representing the captured image are produced.

12. The method of claim 10 or 11, wherein the two dimensionally-arranged image data are provided with additional data and the processing tendency obtaining step obtains the tendency of the image processing from the additional data.

13. A method according to any one of the preceding claims, further comprising:

    a preference tendency obtaining step of obtaining a preference tendency of a user; and
    a correcting step of correcting an extent of the image processing on the basis of the preference tendency of the user obtained by the processing tendency obtaining step.

14. The method of claim 13, wherein the preference tendency obtaining step obtains information regarding at least one of a type of a photographing device, a number of photographing pixels, an exposing mode and a white balance and obtains the preference tendency of the user from the obtained information.

15. The method of claim 13 or 14, wherein the two dimensionally-arranged image data are provided with additional data and the preference tendency obtaining step obtains the preference tendency of the user from the additional data.

16. A method according to any one of claims 2 to 15, wherein the image processing content determining step determines the content of the image processing in accordance with whether or not the angle of field is a reference field angle or less.

17. The method of claim 16, wherein when the angle of field is smaller than the reference field angle, the image processing content determining step increases the contrast more.

18. The method of claim 17, wherein when the angle of field is smaller than the reference field angle, the image processing content determining step increases the contrast by 5% or more.

19. The method of claim 16, wherein when the angle of field is larger than the reference field angle, the image processing content determining step decreases the contrast less.

20. The method of claim 19, wherein when the angle of field is larger than the reference field angle, the image processing content determining step decreases the contrast by 5% or less.

21. The method of claim 16, 17 or 18 wherein when the angle of field is smaller than the reference field angle, the smaller the angle of field is, the more an edge enhancement processing or a high frequency component enhancement processing is applied.

22. The method of claim 16, 19 or 20, wherein when the angle of field is larger than the reference field angle, the larger the angle of field is, the more a granular noise eliminating processing or an intermediate frequency component reflecting processing is applied.

23. The method of claim 16, 17 or 18, wherein when the angle of field is smaller than the reference field angle, the smaller the angle of field is, the more a chroma enhancement processing or a high frequency component enhancement processing is applied.

24. The method of claim 16, 19 or 20, wherein when the angle of field is larger than the reference field angle, the larger the angle of field is, the more a chroma enhancement processing or a high frequency component enhancement processing is applied.

25. A method according to any one of claims 16 to 24, wherein the reference field angle is 10°.

26. A method according to any one of the preceding claims, wherein the image processing method produces visual image-referred data of output image signals by conducting the image processing for the captured-image data outputted from the image capturing device so as to optimize a visual image formation on an output medium.

27. The method of claim 26, wherein the captured-image data outputted from the image capturing device are scene-referred image data.

28. The method of claim 26, wherein the captured-image data outputted from the image capturing device are scene-referred raw data.

29. The method of claim 26, wherein the captured-image data outputted from the image capturing device are visual image-referred data.

30. A readable product from which a program representing an image processing method is read, the image processing method is a method of applying an image processing onto two dimensionally-arranged image data representing a captured image including a main captured-subject and producing image signals to reproduce the captured image visually with one of various reproduction sizes on one of various kinds of recording media, comprising:

a reproduction size determining step of determining a reproduction size of the captured image to be reproduced visually on a recording medium;
a subject size determining step of determining a size of the main captured-subject on the determined reproduction size of the captured image;
an image processing content determining step of changing a content of the image processing on the basis of the determined reproduction size of the captured image and the determined size of the main captured-subject; and
a processing step of applying the image processing with the determined content onto the two dimensionally-arranged image data and producing image signals to reproduce the captured image visually with the determined reproduction size on the recording medium.

31. The readable product of claim 30, wherein the image processing content determining step estimates an angle of field for the main captured-subject from a viewing distance to observe the captured image reproduced with the determined reproduction size and changes the content of the image processing on the basis of the estimated angle of field for the main captured-subject.

32. The readable product of claim 30 or 31, wherein the two dimensionally-arranged image data are provided with additional data including size information and the subject size determining step obtains the occupying ratio from the size information of the additional data.

33. The readable product of claim 30 or 31, wherein the two dimensionally-arranged image data are provided with additional data including photographing information and the subject size determining step estimates an occupying ratio of the main captured-subject on the captured image from the photographing information of the additional data and determines the size of the main captured-subject on the basis of the estimated occupying ratio.

34. The readable product of claim 30 or 31, wherein the subject size determining step estimates an occupying ratio of the main captured-subject on the captured image from the two dimensionally-arranged image data and determines the size of the main captured-subject on the basis of the estimated occupying ratio.

35. A readable product according to any one of claims 30 to 34, further comprising:

a processing tendency obtaining step of obtaining a tendency of the image processing applied when the image signals representing the captured image are produced; and
a correcting step of correcting an extent of the image processing on the basis of the tendency of the image processing obtained by the processing tendency obtaining step.

36. A readable product according to any one of claims 30 to 35, further comprising:

a preference tendency obtaining step of obtaining a preference tendency of a user; and
a correcting step of correcting an extent of the image processing on the basis of the preference tendency of the user obtained by the processing tendency obtaining step.

37. An apparatus for applying an image processing onto two dimensionally-arranged image data representing a captured image including a main captured-subject and producing image signals to reproduce the captured image visually with one of various reproduction sizes on one of various kinds of recording media, comprising:

a reproduction size determining section for determining a reproduction size of the captured image to be reproduced visually on a recording medium;
a subject size determining section for determining a size of the main captured-subject on the determined reproduction size of the captured image;
an image processing content changing section for changing a content of the image processing on the basis of the determined reproduction size of the captured image and the determined size of the main captured-subject; and
a processing section for applying the image processing with the determined content onto the two dimensionally-arranged image data and producing image signals to reproduce the captured image visually with the determined reproduction size on the recording medium.

38. The apparatus of claim 37, wherein the subject size determining section obtains an occupying ratio of the main captured-subject on the captured image and determines the size of the main captured-subject on the basis of the obtained occupying ratio.

39. The apparatus of claim 38, wherein the two dimensionally-arranged image data are provided with additional data including size information and the subject size determining section obtains the occupying ratio from the size information of the additional data.

40. The apparatus of claim 38, wherein the two dimensionally-arranged image data are provided with additional data including photographing information and the subject size determining section estimates an occupying ratio of the main captured-subject on the captured image from the photographing information of the additional data and determines the size of the main captured-subject on the basis of the estimated occupying ratio.

41. An apparatus according to any one of claims 37 to 40, further comprising:

a processing tendency obtaining section for obtaining a tendency of the image processing applied when the image signals representing the captured image are produced; and
a correcting section for correcting an extent of the image processing on the basis of the tendency of the image processing obtained by the processing tendency obtaining section.

42. An apparatus according to any one of claims 37 to 41, further comprising:

a preference tendency obtaining section for obtaining a preference tendency of a user; and
a correcting section for correcting an extent of the image processing on the basis of the preference tendency of the user obtained by the processing tendency obtaining step.

FIG. 1

Y-axis: OBSERVATION DISTANCE (cm)
X-axis: LENGTH OF LONGER SIDE OF IMAGE (cm)

FIG. 2

HIGH CONTRAST / LOW CONTRAST
Y-axis: CONTRAST RATIO
X-axis: ANGLE OF FIELD OF PRIMARY SUBJECT

FIG. 3

SHARP / SOFT
Y-axis: SHARPNESS EMPHASIS
X-axis: ANGLE OF FIELD OF PRIMARY SUBJECT

# FIG. 4

SMOOTH — GRAININESS CONTROL (2, 1, 0)
GRAINY

ANGLE OF FIELD OF PRIMARY SUBJECT (0, 10, 20, 30, 40)

# FIG. 5

SHOWY — CHROMA EMPHASIS (1.5, 1, 0.5)
QUIET

ANGLE OF FIELD OF PRIMARY SUBJECT (0, 10, 20, 30, 40)

# FIG. 6

GAIN OF MEDIUM FREQUENCY COMPONENT (1, 0.5, 0)

ANGLE OF FIELD OF PRIMARY SUBJECT (0, 10, 20, 30, 40)

# FIG. 7

FIG. 8

# FIG. 9

SAMPLE IDENTIFICATION INFORMATION D1, D2 AND D3

P1, P2, P3

PRINT MAKING SECTION — 5

EXPOSURE PROCESSING SECTION — 4

CRT — 8

OPERATION SECTION — 11, 12

IMAGE PROCESSING SECTION — 7, 70

DATA STORAGE MEANS — 71

TEMPLATE STORAGE MEANS — 72

IMAGE CONVEYANCE SECTION — 15, 31

16a, 16b, 16c

FILM SCANNER SECTION — 9

REFLECTION-TYPE DOCUMENT INPUT APPARATUS — 10

IMAGE TRANSFER MEANS — 30, 14

13a, 13b

Q, Q2

N, P

2

## FIG. 10

# FIG. 11

START

S111

IS TEMPLATE PROCESSING NECESSARY ?

No → 

S112

TEMPLATE PROCESSING

Yes ↓

S113

IS A SIZE OF OUTPUT IMAGE KNOWN ?

No →

S114

ESTIMATION OF A SIZE OF OUTPUT IMAGE

Yes ↓

S115

IS A SIZE OF PRIMARY SUBJECT KNOWN?

No →

S116

ESTIMATION OF A SIZE OF PRIMARY SUBJECT

Yes ↓

DETERMINATION OF CONTENTS OF IMAGE PROCESSING — S117

IMPLEMENTATION OF IMAGE PROCESSING — S118

TRANSMIT OF PROCESSED IMAGE SIGNAL — S119

END

# FIG. 12

```
                    ┌──────────┐
                    │  START   │
                    └────┬─────┘
                         │ S121
                    ◇─────────────◇          Yes
                    IS CENTRAL              ──────────────────────────┐
                    COORDINATE                                        │
                    KNOWN?                                            │ S122
                    ◇─────────────◇                          ┌──────────────────────┐
                         │ No                                │ CALCULATION OF A SIZE │
                         │        S124                       │ OF AN AREA WHERE      │
                    ◇─────────────◇       Yes                │ LIGHTNESS AND HUE     │
                    NIGHT VIEW          ──────────┐          │ NEAR CENTRAL          │
                    MODE ?                        │          │ COORDINATE ARE CLOSE  │
                    ◇─────────────◇               │ S125     └───────────┬───────────┘
                         │ No              ◇─────────────◇     Yes                │
                         │                 IS A BRIGHT     ──────────┐          │
                         │                 AREA PRESENT?             │ S126     │
                         │                 ◇─────────────◇    ┌──────────────┐  │
                         │                      │ No          │ CALCULATION  │  │
                         │ ◄────────────────────┘             │ OF A SIZE OF │  │
                         │                                    │ A BRIGHT AREA│  │
                         │        S127                        └──────┬───────┘  │
                    ◇─────────────◇       Yes                        │          │
                    PORTRAIT MODE ?     ──────────┐                  │          │
                    ◇─────────────◇               │ S128            │          │
                         │ No              ◇─────────────◇    Yes     │          │
                         │                 IS A FLESH      ──────┐   │          │
                         │                 COLOR AREA            │S129│          │
                         │                 PRESENT?        ┌──────────────┐      │
                         │                 ◇─────────────◇ │ CALCULATION  │      │
                         │                      │ No       │ OF A SIZE OF │      │
                         │ ◄────────────────────┘          │ A FLESH COLOR│      │
                         │                                 │ AREA         │      │
                         │        S130                     └──────┬───────┘      │
                    ◇─────────────◇       Yes                     │              │
                    IS A SUBJECT        ──────────────┐          │              │
                    DISTANCE KNOWN?                   │          │              │
                    ◇─────────────◇                   │          │              │
                         │ No                         │          │              │
```

Start → S121: IS CENTRAL COORDINATE KNOWN?
- Yes → S122: CALCULATION OF A SIZE OF AN AREA WHERE LIGHTNESS AND HUE NEAR CENTRAL COORDINATE ARE CLOSE
- No → S124: NIGHT VIEW MODE?
  - Yes → S125: IS A BRIGHT AREA PRESENT?
    - Yes → S126: CALCULATION OF A SIZE OF A BRIGHT AREA
    - No →
  - No → S127: PORTRAIT MODE?
    - Yes → S128: IS A FLESH COLOR AREA PRESENT?
      - Yes → S129: CALCULATION OF A SIZE OF A FLESH COLOR AREA
      - No →
    - No → S130: IS A SUBJECT DISTANCE KNOWN?
      - Yes → S131: CALCULATING A SIZE OF A FACE FROM A SUBJECT DISTANCE
      - No → S132: IS STROBE INFORMATION KNOWN?
        - Yes → S133: ESTIMATION OF A SUBJECT DISTANCE → S131: CALCULATING A SIZE OF A FACE FROM A SUBJECT DISTANCE
        - No → S134: CALCULATION OF A SIZE OF 10% OF TOTAL IMAGE

S123: ASSUMING A CALCULATED SIZE TO BE AN ESTIMATED VALUE → END

44

EP 1 395 038 A2

# FIG. 13

```
                    START

                      │
                      ▼
              S140         Yes
        ◇ IS IMAGE PROCESSING ◇──────────┐
          PROHIBITED ?                    │
                      │                   │
                    No│                   ▼        S141
                      ▼                ┌──────────────┐
        ┌──────────────────────┐      │  NO IMAGE    │
  S142  │ ESTIMATING AN OBSERVATION   │  PROCESSING  │
        │ DISTANCE FROM A SIZE │      └──────────────┘
        │  OF AN OUTPUT IMAGE  │              │
        └──────────────────────┘              ▼
                      │                     END
                      ▼
        ┌──────────────────────┐
        │ CALCULATING AN ANGLE OF FIELD
  S143  │ OF A PRIMARY SUBJECT FROM AN
        │ OBSERVATION DISTANCE AND A SIZE
        │  OF THE PRIMARY SUBJECT │
        └──────────────────────┘
                      │
                      ▼
        ┌──────────────────────┐
        │ DETERMINING A LEVEL OF │
  S144  │ IMAGE PROCESSING FROM │
        │  AN ANGLE OF FIELD   │
        └──────────────────────┘
```

S140 IS IMAGE PROCESSING PROHIBITED ? — Yes / No

S141 NO IMAGE PROCESSING

S142 ESTIMATING AN OBSERVATION DISTANCE FROM A SIZE OF AN OUTPUT IMAGE

S143 CALCULATING AN ANGLE OF FIELD OF A PRIMARY SUBJECT FROM AN OBSERVATION DISTANCE AND A SIZE OF THE PRIMARY SUBJECT

S144 DETERMINING A LEVEL OF IMAGE PROCESSING FROM AN ANGLE OF FIELD

S145 IS IMAGE PROCESSING TREND IN PHOTOGRAPHING KNOWN? — Yes / No

S146 IS IT POSSIBLE TO ESTIMATE IMAGE PROCESSING TREND IN PHOTOGRAPHING? — Yes / No

S147 ESTIMATING IMAGE PROCESSING TREND IN PHOTOGRAPHING

S148 ASSUMING AVERAGE IMAGE PROCESSING TENDENCY IN PHOTOGRAPHING

S149 CORRECTING A LEVEL OF IMAGE PROCESSING ACCORDING TO IMAGE PROCESSING TREND IN PHOTOGRAPHING

S150 IS TASTE TREND OF A USER KNOWN? — No / Yes

S151 IS IT POSSIBLE TO ESTIMATE TASTE TREND OF A USER? — Yes / No

S152 ESTIMATING TASTE TREND OF A USER

S153 CORRECTING A LEVEL OF IMAGE PROCESSING ACCORDING TO TASTE TREND OF A USER

END